# EUROPEAN PATENT SPECIFICATION

(11) **EP 4 514 146 B1**
(45) Date of publication and mention of the grant of the patent: **13.05.2026**
(21) Application number: 24712853.1
(22) Date of filing: 25.03.2024
(51) Int. Cl.: A23L 2/385, A23L 2/52, A23L 2/56, C12C 5/02, C12C 11/11, C12G 3/04, C12G 3/055, C12G 3/06

(54) **A COMBINATION FOR USE IN THE PREPARATION OF A DRINKABLE FOAMING OR FOAMABLE LIQUID, A DEVICE AND A METHOD FOR PREPARING AND DISPENSING A DRINKABLE FOAMING OR FOAMABLE LIQUID**
EINE KOMBINATION ZUR VERWENDUNG BEI DER ZUBEREITUNG EINER TRINKBAREN, SCHÄUMENDEN ODER AUFSCHÄUMBAREN FLÜSSIGKEIT, EINE VORRICHTUNG UND EIN VERFAHREN ZUR ZUBEREITUNG UND ABGABE EINER TRINKBAREN, AUFSCHÄUMENDEN ODER AUFSCHÄUMBAREN FLÜSSIGKEIT
COMBINAISON À UTILISER DANS LA PRÉPARATION D'UN LIQUIDE MOUSSANT OU MOUSSABLE BUVABLE, DISPOSITIF ET PROCÉDÉ DE PRÉPARATION ET DE DISTRIBUTION D'UN LIQUIDE MOUSSANT OU MOUSSANT BUVABLE

(30) Priority: 24.03.2023 NL 2034419
(43) Date of publication of application: 05.03.2025
(73) Proprietor: Bar.on B.V., 3980 Tessenderlo (BE)
(72) Inventor: STANDAERT, Dirk, 2020 Antwerpen (BE); DESTOOP, Valentijn, 2020 Antwerpen (BE); BOSSAERT, Sofie, 2020 Antwerpen (BE); DAEMS, Devin, 2020 Antwerpen (BE); MERTENS, Pascal, 2020 Antwerpen (BE); VERSTREPEN, Kevin, 3001 Heverlee (BE); STEENSELS, Jan, 3001 Heverlee (BE); SPAEPEN, Stijn, 3001 Heverlee (BE); BIRCHAM, Peter, 3001 Heverlee (BE); BAUWENS, Jeroen, 3001 Heverlee (BE)
(74) Representative: Arnold & Siedsma
(86) International application number: PCT/EP2024/058010
(87) International publication number: WO 2024/200384

(56) References cited:
- WO-A1-2021/228878
- WO-A2-2014/152558
- US-A1- 2017 202 250

## Description

### Field of Invention

The invention relates to a combination for use in the preparation of drinkable liquid, in particular a drinkable foaming or foamable liquid. The invention further relates to a device for preparing and dispensing a drinkable liquid, in particular a drinkable foaming or foamable liquid and a method for preparing a drinkable foaming or foamable beer or beer-like beverage, preferably a drinkable foaming or foamable low alcohol beer or beer-like beverage.

### Background

A beer, such as a low-alcohol lager beer, is typically produced by a sequence of following processes: malting, mashing, boiling, fermenting, filtering, dealcoholizing, conditioning, carbonating and packaging.

This production method requires multiple weeks, because of the long-term fermenting and conditioning stages, which represents a first problem for the production of e.g. regular beer or low-alcohol beer.

A second problem of this conventional practice is that by the time the low-alcohol beer can be consumed, typically only after weeks or months, its quality has typically already degraded, because of i.a. oxidative degradation mechanisms, compared to the freshly packaged beer.

It was thus an object of the invention to provide a system to overcome these problems.

WO2014152558 and US2017202250 are directed to a flavoring system for making beverages such as beers, wines, liquors, whiskeys,... most of which are typically non-foaming. Moreover, in contrast to the present invention, these references are clearly focused on matching natural flavors, rather than matching the look and feel of reconstituted beers.

WO2021228878 relates to low-alcohol liquid beer concentrates that can be reconstituted to alcoholic beers by the addition of an alcoholic liquid and carbonated water. Herein, the beer concentrate is obtained by a natural brewing/fermentation process, and thus WO202122878, in contrast to the present invention does not relate to beer replicas, in which no brewing process is involved.

### Summary

The invention addresses the above mentioned problems.

The invention, relating to a method, a device and a combination for use, is addressing these two principal problems, being the long production time and the reduced product quality, by providing a solution, as a method and as a device, to prepare a beer ready for serving or consuming in a limited time, in for example less than 15 minutes compared to the convention practice requiring multiple weeks, which can be consumed without quality degradation within for example 15 min after initiating the production method.

In particular, the invention, by providing a method, a device and a combination for use, also enables to produce a high number of different beers in a limited time with a single device. For example, four beverages, e.g. respectively one low-alcohol lager type beer, one stout type beer, one pale ale type beer and one lambic style beer, can consecutively be produced in for example less than 60 minutes.

In addition, the invention provides the possibility to fully customize the beer, so an individual can produce time- and place-independent the beer of his or her personal preference. Consumers have typically a limited numbers of beers they prefer, but even those preferred beers are usually not 'perfect' for a consumer, and with the invention it is an option to fully customize a beer in all organoleptic properties, so with full flexibility in terms of a.o. alcohol percentage, sweetness, bitterness, carbon dioxide content, and other taste and smell characteristics, next to other properties such as mouthfeel and foam.

In addition, the invention provides the possibility to produce beers with compositions which are difficult or impossible to obtain with conventional methods to produce beers, for example beers with a hoppy aroma but no bitter taste, or beers with a flavour profile characterized by higher alcohols and esters, but with no presence of the related organic acids.

In addition, the invention provides the possibility to produce beers with no presence of compounds, typically derived from the brewing ingredients or formed during the conventional brewing process or formed during long-term storage prior to consumption, with an undesirable organoleptic impact (off-flavor) for some or most of the beer types, for example the organic acid 2-methylbutanoic acid (cheesy flavor), the unsaturated aldehyde trans-2-nonenal (cardboard flavor), the heterocyclic aldehyde furfural (papery flavor), the unsaturated ketone oct-1-en-3-one (metallic flavor), the diketone 2,3-butanedione (butterscotch), and various sulfur compounds such as 3-methyl-2-butene-1-thiol (skunk flavor) and dimethyl sulfide (cooked flavor).

It was for the inventors unexpected that by only mixing ingredients or ingredient mixtures a foamable or foaming beverage could be obtained with the organoleptic properties of a conventionally brewed beer or beer-like beverage. In particular, it was unexpectedly found that the combination of proteins or fragments thereof (e.g. polypeptides, peptides and/or amino acids) in combination with hop bitter acids would result in a foamable liquid.

It was for the inventors also unexpected that no premixing of ingredients or ingredients mixtures was required to obtain a beverage with beer or beer-like characteristics, for example, no specific premixing or predispersing using a specific means or combination of means was required for the addition of the bitter hop acids or the addition of the hop oil compounds.

It was for the inventors also unexpected that by dispensing and mixing into a container a limited number of ingredients and ingredients mixtures from a limited number of reservoirs, containing ingredients or ingredient mixtures, multiple beer type beverages could be produced consecutively in a limited time with a single device.

According to a first aspect, a combination for use in the preparation of a drinkable foaming or foamable liquid is provided, preferably a foaming or foamable fermented-beverage liquid or fermented-beverage-like liquid, stored in, offered in, served in or consumed from a container, said combination comprising
at least one individual means to supply a liquid comprising water or carbonated water or at least one individual reservoir comprising a liquid comprising water or carbonated water;
at least one individual reservoir comprising a liquid comprising one or more carbohydrates;
at least one individual reservoir comprising a liquid comprising one or more alcohols with more than two carbon atoms and one or more esters with more than three carbon atoms;
   at least one individual reservoir comprising a liquid comprising one or more hop bitter acids;
wherein at least one of said liquids in one of said individual reservoirs also comprises one or more phenolic compounds;
wherein at least one of said liquids in one of said individual reservoirs also comprises one or more nitrogenous compounds being whey proteins; and
wherein at least one of said liquids in one of said individual reservoirs also comprises one or more organic acids with at least two carbon atoms.

In a very specific aspect, said whey proteins, are hydrolysed whey proteins. Hydrolysed whey protein isolates are typically used as an ingredient in sports nutrition drinks. Its main use in such applications is providing a source of amino acids and protein to aid in muscle recovery after strenuous exercise. In the context of the invention, the whey protein isolates are used to improve the body and mouthfeel of the beers and also to improve the foam stability with minimal impact to organoleptic characteristics of beer. In particular, when blending isomerized alpha acid hop extracts with whey proteins, a stable foam is obtained without the need for brewing or fermenting the beer.

Where in the context of the present invention, reference is made to an individual reservoir, this is meant to be a reservoir that is different to any other individual reservoir so called. Specifically, the invention provides for the use of a combination of a multitude of individual reservoirs. Accordingly, in particular each of said individual reservoir is meant to be a different reservoir.

Preferably, said carbohydrates are selected from the group of mono-, di- and trisaccharides (such as glucose, fructose, sucrose, maltose and maltotriose), oligosaccharides, polysaccharides (with up to 250 glucose units), alpha-glucans (with mainly DP values between 4 and 34 and a smaller fraction with DP values above 35), and beta-glucans;
said alcohols with more than two carbon atoms are selected from the group of 1-propanol, 2-propanol, 2-methyl-1-propanol, 2-methyl-butanol, 3-methyl-1-butanol, 2-phenylethanol, 1-octen-3-ol, 2-decanol and glycerol;
said esters with more than three carbon atoms are selected from the group of ethyl acetate, isoamyl acetate, isobutyl acetate, hexyl acetate, 2-phenylethyl acetate, ethyl butanoate, ethyl pentanoate, ethyl 2-methylbutanoate, ethyl hexanoate, ethyl octanoate, isoamyl octanoate, ethyl nicotinate and ethyl decanoate;
said phenolic compounds are selected from the group of monomeric phenols (such as 4-vinyl guaiacol), phenolic alcohols (such as tyrosol), phenolic acids such as para-coumaric acid, ferulic acids, vanillic acids, gallic acids, caffeic acids, syringic acids and sinapic acids, phenolic amines and amino acids such as hordenine, tyramine, N-methyltyramine, tyrosamine and tyrosine, flavonoids and catechins such as (+)-catechin and (+)-epicatechin, antho-cyanogens such as leucocyanidin, leucopelargonidin, and leucodelphinidin, flavonols such as quercetin, kaempferol, myricetin, iso-quercitin, astragalin and nutin, and condensed polyphenols such as dimeric catechins and oligomeric and polymeric derivatives of catechins and anthocyanogens;
said nitrogenous compounds are whey proteins and
said organic acids with at least two carbon atoms are selected from the group of acetic acid, propanoic acid, butanoic acid, 2-methylpropanoic acid, pentanoic acid, 2-methylbutanoic acid, 3-methylbutanoic acid, octanoic acid, decanoic acid, lactic acid, pyruvic acid, succinic acid, caffeic acid, cinnamic acid, para-coumaric acid, ferulic acid, gallic acid, hydroxybenzoic acid, salicylic acid, sinapic acid, syringic acid and vanillic acid.

Preferably, said combination for use comprises
at least one individual means to supply a liquid comprising water or carbonated water or at least one individual reservoir comprising a liquid comprising water or carbonated water;
at least one individual reservoir comprising ethanol, preferably liquid ethanol;
at least one individual reservoir comprising a liquid comprising one or more carbohydrates;
at least one individual reservoir comprising a liquid comprising one or more alcohols with more than two carbon atoms and one or more esters with more than three carbon atoms;
at least one individual reservoir comprising a liquid comprising one or more hop bitter acids;
wherein at least one of said liquids in one of said individual reservoirs also comprises one or more phenolic compounds;
wherein at least one of said liquids in one of said individual reservoirs also comprises one or more nitrogenous compounds being whey proteins;
wherein at least one of said liquids in one of said individual reservoirs also comprises one or more organic acids with at least two carbon atoms; and
wherein at least one of said liquids in one of said individual reservoirs also comprises one or more hop oil compounds.

More preferably, said hop bitter acids are selected from the group of isohumulones, dihydro-isohumulones, tetrahydro-isohumulones, hexahydro-isohumulones, humulones, reduced humulones, hulupones and reduced hulupones; and
said hop oil compounds are selected from the group of hop monoterpenes, oxygenated hop monoterpenes, hop sesquiterpenes and oxygenated hop sesquiterpenes, myrcene, humulene, caryophyllene, linalool, linalool oxides, citronellol, geraniol, nerol, geranyl acetate, alpha-terpineol, humulene epoxide I, humulene epoxide II, alpha-eudesmol, clovanediol, humulol, humuladienone and humulenol.

More preferably, said combination for use comprises
at least one individual means to supply a liquid comprising water or carbonated water or at least one individual reservoir comprising a liquid comprising water or carbonated water;
at least one individual reservoir comprising ethanol, preferably liquid ethanol; comprising at least one individual reservoir comprising a liquid comprising one or more carbohydrates;
at least one individual reservoir comprising a liquid comprising one or more alcohols with more than two carbon atoms and one or more esters with more than three carbon atoms;
at least one individual reservoir comprising a liquid comprising one or more hop bitter acids;
at least one individual reservoir comprising carbon dioxide, preferably gaseous carbon dioxide;
wherein at least one of said liquids in one of said individual reservoirs also comprises one or more phenolic compounds;
wherein at least one of said liquids in one of said individual reservoirs also comprises one or more nitrogenous compounds being whey proteins;
wherein at least one of said liquids in one of said individual reservoirs also comprises one or more organic acids with at least two carbon atoms;
wherein at least one of said liquids in one of said individual reservoirs also comprises one or more hop oil compounds; and
wherein at least one of said liquids in one of said individual reservoirs also comprises one or more botanical compounds.

Most preferably, said liquid comprising one or more carbohydrates further comprises at least two members of the group of nitrogenous compounds, phenolic compounds, sulfur compounds, ethanol, glycerol, propylene glycol, alcohols with more than two carbon atoms, esters with more than three carbon atoms, organic acids with at least two carbon atoms, inorganic cations and anions, hop bitter acids and hop oil compounds;
wherein said sulfur compounds are selected from the group of hydrogen sulfide, sulfur dioxide, dimethyl sulfide, methionol, methional, methyl thioacetate carbon disulfide, methanethiol, ethylene sulfide, ethanethiol, propanethiol, diethyl sulfide, dimethyl disulfide, diethyl disulfide, dimethyl trisulfide, ethyl thioacetate and 3-methyl-2-butene-1-thiol; and
wherein said inorganic cations and anions are selected from the group of K cations, Na cations, Fe cations, Cu cations, Se cations, Mn cations, Zn cations, chloride anions, sulphate anions, sulphite anions and phosphate anions.

In another aspect, one or more of the reservoirs of the present invention may also further comprise functional components, which may offer specific health benefits such as probiotics, antioxidants, electrolytes, fibers, fatty acids, herbal extracts, amino acids, prebiotics, ..

According to a further aspect a device for preparing and dispensing a drinkable foaming or foamable liquid from a plurality of ingredients, preferably a foaming or foamable fermented-beverage liquid or fermented-beverage-like liquid, the device comprising
a first reservoir configured to comprise a liquid comprising one or more carbohydrates;
a second reservoir configured to comprise a liquid comprising one or more alcohols with more than two carbon atoms and one or more esters with more than three carbon atoms;
a third reservoir fluidly connected to the dispensing means and configured to comprise a liquid comprising one or more hop bitter acids;
a further reservoir fluidly connected to the dispensing means and configured to comprise a liquid comprising one or more whey proteins;
a carbonated water system configured to provide carbonated water; and
a dispensing means fluidly connected to at least the first and the second reservoir, wherein the dispensing means is configured to receive at least a predetermined amount of the liquid from the first reservoir, a predetermined amount of the liquid from the second reservoir, and a predetermined amount of the carbonated water from the carbonated water system;
wherein the dispensing means is configured to dispense the received liquids to an external container to obtain said drinkable foaming or foamable liquid.

Preferably, the first dosing means is fluidly connected to the first reservoir and the dispensing means and configured to provide the dispensing means with the predetermined amount of the liquid from the first reservoir; and
the second dosing means is fluidly connected to the second reservoir and the dispensing means and configured to provide the dispensing means with the predetermined amount of the liquid from the second reservoir.

Preferably, the device further comprising at least one of or a combination of the following:
a fourth reservoir fluidly connected to the dispensing means and configured to comprise a liquid comprising one or more hop oil compounds; and
a fifth reservoir fluidly connected to the dispensing means and configured to comprise a liquid comprising one or more botanical compounds;
wherein the dispensing means is further configured to receive at least a predetermined amount of the liquid from the fourth reservoir, at least a predetermined amount of the fifth reservoir and is configured to dispense the received liquids to the external container to obtain said drinkable foaming or foamable liquid.

More preferably, the device further comprises at least one mixing vessel for at least partially mixing ingredients of ingredients mixtures from at least the first and second reservoir.

More preferably, the at least one mixing vessel is a mixing channel arranged between at least the first and the second reservoir and the dispensing means.

More preferably, the carbonated water system comprises
a reservoir comprising a liquid comprising water configured for holding a liquid comprising water;
a reservoir comprising carbon dioxide configured for holding carbon dioxide; and
a carbonation reservoir;
wherein the reservoir comprising a liquid comprising water and the reservoir comprising carbon dioxide are fluidly connected to the carbonation reservoir such that the carbonation reservoir can receive water and carbon dioxide from the reservoir comprising a liquid comprising water to carbonize the received liquid comprising water using the received carbon dioxide; and
wherein the carbonation reservoir is fluidly connected to the dispensing means.

Most preferably, the carbonated water system comprises a means for pulse injection of carbon dioxide received from the reservoir comprising carbon dioxide into a liquid comprising water held by the carbonation reservoir and received from the reservoir comprising a liquid comprising water.

Most preferably, the device comprises a heat exchanger configured to cool a fluid, wherein the heat exchanger is arranged upstream of the carbonation reservoir such that the water received from the reservoir comprising a liquid comprising water can be cooled.

According to a further aspect a method for preparing a foaming or foamable beer or beer-like beverage is provided, preferably a foaming or foamable low alcohol beer or beer-like beverage, stored in, offered in, served in or consumed from a container,
wherein the addition of said ingredients and ingredient mixtures comprises the addition of water, ethanol, carbon dioxide, a liquid comprising one or more carbohydrates, a liquid comprising one or more alcohols with more than two carbon atoms and one or more esters with more than three carbon atoms, and a liquid comprising one or more hop bitter acids;
wherein at least one of said individual reservoirs comprises a liquid comprising one or more carbohydrates;
wherein at least one of said individual reservoirs comprises a liquid comprising one or more alcohols with more than two carbon atoms;
wherein at least one of said individual reservoirs comprises a liquid comprising one or more esters with more than three carbon atoms;
wherein at least one of said individual reservoirs comprises a liquid comprising one or more hop bitter acids;
wherein at least one of said liquids in one of said individual reservoirs also comprises one or more phenolic compounds;
wherein at least one of said liquids in one of said individual reservoirs also comprises one or more nitrogenous compoundsbeing whey proteins;
wherein at least one of said liquids in one of said individual reservoirs also comprises one or more organic acids with at least two carbon atoms; and
wherein at least one of said liquids in one of said individual reservoir also comprises one or more hop oil compounds.

Preferably, the method for preparing a foaming or foamable beer or beer-like beverage, preferably a foaming or foamable low alcohol beer or beer-like beverage, stored in, offered in, served in or consumed from a container,
wherein the concentration of ethanol in said foaming or foamable beer or beer-like beverage is below 10 % ABV;
wherein the concentration of carbon dioxide in said foaming or foamable beer or beer-like beverage is below 10 gram carbon of dioxide per liter of said foaming or foamable beer or beer-like beverage;
wherein the concentration of said carbohydrates in said foaming or foamable beer or beer-like beverage is in the range of 1000 to 100000 ppm;
wherein the concentration of said alcohols with more than two carbon atoms in said foaming or foamable beer or beer-like beverage is in the range of 1 to 1000 ppm;
wherein the concentration of said esters with more than three carbon atoms in said foaming or foamable beer or beer-like beverage is in the range of 1 to 200 ppm;
wherein the concentration of said organic acids with more than two carbon atoms in said foaming or foamable beer or beer-like beverage is in the range of 10 to 1000 ppm;
wherein the concentration of said phenolic compounds in said foaming or foamable beer or beer-like beverage is in the range of 1 to 1000 ppm;
wherein the concentration of said nitrogenous compounds being whey proteins in said foaming or foamable beer or beer-like beverage is in the range of 100 to 10000 ppm;
wherein the concentration of said hop bitter acids in said foaming or foamable beer or beer-like beverage is in the range of 2 to 200 ppm; and
wherein the concentration of said hop oil compounds in said foaming or foamable beer or beer-like beverage is in the range of 10 to 2000 ppb.

More preferably, the addition of said ingredients and ingredient mixtures to said container is at least for two of said ingredients and ingredient mixtures at least partially simultaneously and is at least for two of said ingredients and ingredient mixtures at least partially sequentially.

In an embodiment, the invention relates to a method for preparing a drinkable foaming or foamable liquid, preferably a foaming or foamable fermented-beverage liquid or fermented-beverage-like liquid, stored in, offered in, served in or consumed from a container,
comprising mixing ingredients and ingredient mixtures in said container by adding said ingredients and ingredient mixtures to said container in an effective amount to obtain said drinkable foaming or foamable liquid, by adding said ingredients and ingredient mixtures from individual reservoirs comprising said ingredients or ingredient mixtures;
wherein the addition of said ingredients and ingredient mixtures comprises the addition of a liquid comprising water, the addition of a liquid comprising one or more carbohydrates (such as monosaccharides, disaccharides, oligosaccharides and polysaccharides), the addition of a liquid comprising one or more alcohols with more than two carbon atoms and the addition of a liquid comprising one or more esters with more than three carbon atoms;
wherein at least one of said individual reservoirs comprises a liquid comprising one or more carbohydrates;
wherein at least one of said individual reservoirs comprises a liquid comprising one or more alcohols with more than two carbon atoms;
wherein at least one of said individual reservoirs comprises a liquid comprising one or more esters with more than three carbon atoms;
wherein at least one of said liquids in one of said individual reservoirs also comprises one or more phenolic compounds (such as monophenols, monomeric polyphenols and condensed polyphenols);
wherein at least one of said liquids in one of said individual reservoirs also comprises one or more nitrogenous compounds being whey proteins;
wherein at least one of said liquids in one of said individual reservoirs also comprises one or more organic acids with at least two carbon atoms.

By drinkable is meant that it can be consumed as such (as a beverage) or alternatively (for example as a concentrate) after dilution with another drinkable liquid, such as water or carbonated water.

In a preferred embodiment, the addition of said ingredients and ingredient mixtures to said container is at least for two of said ingredients and ingredient mixtures at least partially simultaneously. As an example, the addition of said liquid comprising one or more alcohols with more than two carbon atoms to said container and the addition of said liquid comprising one or more esters with more than three carbon atoms to said container can be at least partially simultaneous.

In a preferred embodiment, the addition of said ingredients and ingredient mixtures to said container is at least for two of said ingredients and ingredient mixtures at least partially sequentially. As an example, the addition of said liquid comprising one or more carbohydrates to said container and the addition of said liquid comprising one or more alcohols with more than two carbon atoms to said container can be at least partially sequential.

In a more preferred embodiment, the addition of said ingredients and ingredient mixtures to said container is at least for two of said ingredients and ingredient mixtures at least partially simultaneously and is at least for two of said ingredients and ingredient mixtures at least partially sequentially.

In an embodiment, the invention relates to a method for preparing a drinkable foaming or foamable liquid, preferably a foaming or foamable fermented-beverage liquid or fermented-beverage-like liquid, stored in, offered in, served in or consumed from a container,
comprising mixing ingredients and ingredient mixtures in said container by adding said ingredients and ingredient mixtures to said container in an effective amount to obtain said drinkable foaming or foamable liquid, by adding said ingredients and ingredient mixtures from individual reservoirs comprising said ingredients or ingredient mixtures;
wherein the addition of said ingredients and ingredient mixtures comprises the addition of a liquid comprising water, the addition of a liquid comprising one or more carbohydrates (such as monosaccharides, disaccharides, oligosaccharides and polysaccharides) and the addition of a liquid comprising one or more alcohols with more than two carbon atoms and one or more esters with more than three carbon atoms;
wherein at least one of said individual reservoirs comprises a liquid comprising one or more carbohydrates;
wherein at least one of said individual reservoirs comprises a liquid comprising one or more alcohols with more than two carbon atoms and one or more esters with more than three carbon atoms;
wherein at least one of said liquids in one of said individual reservoirs also comprises one or more phenolic compounds (such as monophenols, monomeric polyphenols and condensed polyphenols);
wherein at least one of said liquids in one of said individual reservoirs also comprises one or more nitrogenous compounds being whey proteins;
wherein at least one of said liquids in one of said individual reservoirs also comprises one or more organic acids with at least two carbon atoms.

In a preferred embodiment, the addition of said ingredients and ingredient mixtures to said container is at least for two of said ingredients and ingredient mixtures at least partially simultaneously.

In a preferred embodiment, the addition of said ingredients and ingredient mixtures to said container is at least for two of said ingredients and ingredient mixtures at least partially sequentially.

In a more preferred embodiment, the addition of said ingredients and ingredient mixtures to said container is at least for two of said ingredients and ingredient mixtures at least partially simultaneously and is at least for two of said ingredients and ingredient mixtures at least partially sequentially.

In a preferred embodiment, the invention relates to a method for preparing a drinkable foaming or foamable liquid, wherein the concentration of said carbohydrates in said drinkable foaming or foamable liquid is in the range of 1000 to 100000 ppm.

Examples of said carbohydrates are mono-, di- and trisaccharides (such as glucose, fructose, sucrose, maltose and maltotriose), oligosaccharides, polysaccharides (with up to 250 glucose units), alpha-glucans (with mainly DP values between 4 and 34 and a smaller fraction with DP values above 35), and beta-glucans.

In a preferred embodiment, the invention relates to a method wherein said liquid comprising one or more carbohydrates comprises maltodextrins.

In a preferred embodiment, the invention relates to a method wherein said liquid comprising one or more carbohydrates comprises malt extract.

In a preferred embodiment, the invention relates to a method wherein said liquid comprising one or more carbohydrates comprises malt.

In a preferred embodiment, the invention relates to a method wherein said liquid comprising one or more carbohydrates also comprises at least two members of the group of nitrogenous compounds, phenolic compounds, sulphur compounds, ethanol, glycerol, propylene glycol, alcohols with more than two carbon atoms, esters with more than three carbon atoms, organic acids with at least two carbon atoms, salts, hop bitter compounds and hop oil compounds.

In a preferred embodiment, the invention relates to a method for preparing a drinkable foaming or foamable liquid, wherein the concentration of said alcohols with more than two carbon atoms in said drinkable foaming or foamable liquid is in the range of 1 to 1000 ppm.

Examples of said alcohols with more than two carbon atoms are 1-propanol, 2-propanol, 2-methyl-1-propanol, 2-methyl-butanol, 3-methyl-1-butanol, 2-phenylethanol, 1-octen-3-ol, 2-decanol and glycerol.

In a preferred embodiment, the invention relates to a method for preparing a drinkable foaming or foamable liquid, wherein the concentration of said esters with more than three carbon atoms in said drinkable foaming or foamable liquid is in the range of 1 to 200 ppm.

Examples of said esters with more than three carbon atoms are ethyl acetate, isoamyl acetate, isobutyl acetate, hexyl acetate, 2-phenylethyl acetate, ethyl butanoate, ethyl pentanoate, ethyl 2-methylbutanoate, ethyl hexanoate, ethyl octanoate, isoamyl octanoate, ethyl nicotinate and ethyl decanoate.

In a preferred embodiment, the invention relates to a method wherein said liquid comprising one or more alcohols with more than two carbon atoms and one or more esters with more than three carbon atoms comprises
at least one member of the group of 1-propanol, 2-propanol, 2-methyl-1-propanol, 2-methyl-butanol, 3-methyl-1-butanol, 2-phenylethanol, 1-octen-3-ol, 2-decanol and glycerol, and at least one member of the group of ethyl acetate, isoamyl acetate, isobutyl acetate, hexyl acetate, 2-phenylethyl acetate, ethyl butanoate, ethyl pentanoate, ethyl 2-methylbutanoate, ethyl hexanoate, ethyl octanoate, isoamyl octanoate, ethyl nicotinate and ethyl decanoate.

In a more preferred embodiment, the invention relates to a method wherein said liquid comprising one or more alcohols with more than two carbon atoms and one or more esters with more than three carbon atoms also comprises at least one organic acid selected from the group of acetic acid, propanoic acid, butanoic acid, 2-methylpropanoic acid, pentanoic acid, 2-methylbutanoic acid, 3-methylbutanoic acid, octanoic acid, decanoic acid, lactic acid, pyruvic acid, succinic acid, caffeic acid, cinnamic acid, para-coumaric acid, ferulic acid, gallic acid, hydroxybenzoic acid, salicylic acid, sinapic acid, syringic acid and vanillic acid.

In a preferred embodiment, the invention relates to a method wherein said liquid comprising one or more alcohols with more than two carbon atoms and one or more esters with more than three carbon atoms also comprises at least two members of the group of nitrogenous compounds, phenolic compounds, sulfur compounds, ethanol, glycerol, propylene glycol, organic acids with at least two carbon atoms, salts, hop bitter compounds and hop oil compounds.

In a preferred embodiment, the invention relates to a method for preparing a drinkable foaming or foamable liquid, wherein the concentration of said organic acids with at least two carbon atoms in said drinkable foaming or foamable liquid is in the range of 10 to 1000 ppm.

Examples of said organic acids with at least two carbon atoms are acetic acid, propanoic acid, butanoic acid, 2-methylpropanoic acid, pentanoic acid, 2-methylbutanoic acid, 3-methylbutanoic acid, octanoic acid, decanoic acid, lactic acid, pyruvic acid, succinic acid, caffeic acid, cinnamic acid, para-coumaric acid, ferulic acid, gallic acid, hydroxybenzoic acid, salicylic acid, sinapic acid, syringic acid and vanillic acid.

In a preferred embodiment, the invention relates to a method for preparing a drinkable foaming or foamable liquid, wherein the concentration of said phenolic compounds in said drinkable foaming or foamable liquid is in the range of 0 to 1000 ppm.

Examples of said phenolic compounds, in beer typically derived from malt and hops addition, are monomeric phenols such as 4-vinyl guaiacol, phenolic alcohols such as tyrosol, phenolic acids such as para-coumaric acid, ferulic acids, vanillic acids, gallic acids, caffeic acids, syringic acids, sinapic acids, etc., phenolic amines and amino acids such as hordenine, tyramine, N-methyltyramine, tyrosamine and tyrosine, flavonoids and catechins such as (+)-catechin, (+)-epicatechin, etc., antho-cyanogens such as leucocyanidin, leucopelargonidin, leucodelphinidin, etc., flavonols such as quercetin, kaempferol, myricetin, iso-quercitin, astragalin and nutin, and condensed polyphenols such as dimeric catechins and oligomeric and polymeric derivatives of catechins and anthocyanogens.

In a preferred embodiment, the invention relates to a method for preparing a drinkable foaming or foamable liquid, wherein the concentration of said nitrogenous compounds in said drinkable foaming or foamable liquid is in the range of 10 to 20000 ppm.

Examples of said nitrogenous compounds are whey proteins.

In a more preferred embodiment, the invention relates to a method for preparing a drinkable foaming or foamable liquid, wherein the concentration in said drinkable foaming or foamable liquid of proteins with a molecular weight in the range of 5000 to 50000 g/mol is in the range of 10 to 20000 ppm.

Examples of said proteins with a molecular weight in the range of 5000 to 50000 g/mol are protein Z, as an example of a HMW protein (with a MW range of 35000 to 50000), and LTP1, as an example of a LMW protein (with a MW range of 5000 to 20000).

Examples of said sulfur compounds are hydrogen sulfide, sulfur dioxide, dimethyl sulfide, methionol, methional, methyl thioacetate carbon disulfide, methanethiol, ethylene sulfide, ethanethiol, propanethiol, diethyl sulfide, dimethyl disulfide, diethyl disulfide, dimethyl trisulfide, ethyl thioacetate and 3-methyl-2-butene-1-thiol.

In a preferred embodiment, the invention relates to a method for preparing a drinkable foaming or foamable liquid, wherein said addition of said ingredients and ingredient mixtures comprises the addition from at least two different individual reservoirs;
wherein one of the two different individual reservoirs comprises a liquid comprising one or more carbohydrates;
wherein one of the two different individual reservoirs comprises a liquid comprising one or more alcohols with more than two carbon atoms and one or more esters with more than three carbon atoms.

In a more preferred embodiment, the invention relates to a method for preparing a drinkable foaming or foamable liquid, wherein said addition of said ingredients and ingredient mixtures comprises the addition from at least three different individual reservoirs;
wherein one of the three different individual reservoirs comprises a liquid comprising one or more carbohydrates;
wherein one of the three different individual reservoirs comprises a liquid comprising one or more alcohols with more than two carbon atoms and one or more esters with more than three carbon atoms;
wherein one of the three different individual reservoirs also comprises a liquid comprising one or more alcohols with more than two carbon atoms and one or more esters with more than three carbon atoms.

The application further relates to a method for preparing a drinkable foaming or foamable liquid, preferably a foaming or foamable fermented-beverage liquid or fermented-beverage-like liquid, more preferably a foaming or foamable beer or beer-like beverage, most preferably a foaming or foamable low-alcohol beer or beer-like beverage, stored in, offered in, served in or consumed from a container,
comprising mixing ingredients and ingredient mixtures in said container by adding said ingredients and ingredient mixtures to said container in an effective amount to obtain said drinkable foaming or foamable liquid, by adding said ingredients and ingredient mixtures from individual reservoirs comprising said ingredients or ingredient mixtures;
wherein the addition of said ingredients and ingredient mixtures comprises the addition of at least five members of the group of water, ethanol, carbon dioxide, a liquid comprising one or more carbohydrates, a liquid comprising one or more alcohols with more than two carbon atoms, a liquid comprising one or more esters with more than three carbon atoms, and a liquid comprising one or more hop bitter acids;
wherein at least one of said individual reservoirs comprises a liquid comprising one or more carbohydrates;
wherein at least one of said individual reservoirs comprises a liquid comprising one or more alcohols with more than two carbon atoms;
wherein at least one of said individual reservoirs comprises a liquid comprising one or more esters with more than three carbon atoms;
wherein at least one of said individual reservoirs comprises a liquid comprising one or more hop bitter acids;
wherein at least one of said liquids in one of said individual reservoirs also comprises one or more phenolic compounds;
wherein at least one of said liquids in one of said individual reservoirs also comprises one or more nitrogenous compounds, in particular proteins, polypeptides, peptides and/or amino acids;
wherein at least one of said liquids in one of said individual reservoirs also comprises one or more organic acids with at least two carbon atoms.

In a preferred embodiment, the addition of said ingredients and ingredient mixtures to said container is at least for two of said ingredients and ingredient mixtures at least partially simultaneously.

In a preferred embodiment, the addition of said ingredients and ingredient mixtures to said container is at least for two of said ingredients and ingredient mixtures at least partially sequentially.

In a more preferred embodiment, the addition of said ingredients and ingredient mixtures to said container is at least for two of said ingredients and ingredient mixtures at least partially simultaneously and is at least for two of said ingredients and ingredient mixtures at least partially sequentially.

In a preferred embodiment, the invention relates to a method for preparing a drinkable foaming or foamable liquid, wherein the concentration of ethanol in said drinkable foaming or foamable liquid is below 10 % ABV.

In a preferred embodiment, the invention relates to a method for preparing a drinkable foaming or foamable liquid, wherein the concentration of carbon dioxide in said drinkable foaming or foamable liquid is below 10 gram of carbon dioxide per liter of said drinkable foaming or foamable liquid.

The application further relates to a method for preparing a drinkable foaming or foamable liquid, preferably a foaming or foamable fermented-beverage liquid or fermented-beverage-like liquid, more preferably a foaming or foamable beer or beer-like beverage, most preferably a foaming or foamable low-alcohol beer or beer-like beverage, stored in, offered in, served in or consumed from a container,
comprising mixing ingredients and ingredient mixtures in said container by adding said ingredients and ingredient mixtures to said container in an effective amount to obtain said drinkable foaming or foamable liquid, by adding said ingredients and ingredient mixtures from individual reservoirs comprising said ingredients or ingredient mixtures;
wherein the addition of said ingredients and ingredient mixtures comprises the addition of at least five members of the group of water, ethanol, carbon dioxide, a liquid comprising one or more carbohydrates, a liquid comprising one or more alcohols with more than two carbon atoms and one or more esters with more than three carbon atoms, and a liquid comprising one or more hop bitter acids;
wherein at least one of said individual reservoirs comprises a liquid comprising one or more carbohydrates;
wherein at least one of said individual reservoirs comprises a liquid comprising one or more alcohols with more than two carbon atoms and one or more esters with more than three carbon atoms;
wherein at least one of said individual reservoirs comprises a liquid comprising one or more hop bitter acids;
wherein at least one of said liquids in one of said individual reservoirs also comprises one or more phenolic compounds; whereby at least one of said liquids in one of said individual reservoirs also comprises one or more nitrogenous compounds, in particular proteins, polypeptides, peptides and/or amino acids;
wherein at least one of said liquids in one of said individual reservoirs also comprises one or more organic acids with at least two carbon atoms.

In a preferred embodiment, the addition of said ingredients and ingredient mixtures to said container is at least for two of said ingredients and ingredient mixtures at least partially simultaneously.

In a preferred embodiment, the addition of said ingredients and ingredient mixtures to said container is at least for two of said ingredients and ingredient mixtures at least partially sequentially.

In a more preferred embodiment, the addition of said ingredients and ingredient mixtures to said container is at least for two of said ingredients and ingredient mixtures at least partially simultaneously and is at least for two of said ingredients and ingredient mixtures at least partially sequentially.

In a preferred embodiment, the invention relates to a method for preparing a drinkable foaming or foamable liquid, wherein at least one of said liquids in one of said individual reservoir comprises one or more hop oil compounds.

In a more preferred embodiment, the invention relates to a method for preparing a drinkable foaming or foamable liquid, wherein at least one of said liquids comprising one or more hop bitter acids also comprises one or more hop oil compounds.

In a preferred embodiment, the invention relates to a method for preparing a drinkable foaming or foamable liquid, wherein the concentration of said hop bitter acids in said drinkable foaming or foamable liquid is in the range of 2 to 200 ppm.

Examples of said hop bitter acids are isohumulones, reduced isohumulones, humulones, reduced humulones, hulupones and reduced hulupones. Examples of said reduced isohumulones are dihydro-isohumulones, tetrahydro-isohumulones and hexahydro-isohumulones.

In a preferred embodiment, the invention relates to a method wherein said liquid comprising one or more hop bitter acids also comprises at least two members of the group of hop oil compounds, alcohols with more than two carbon atoms, esters with more than three carbon atoms, organic acids with at least two carbon atoms, salts, nitrogenous compounds, phenolic compounds, sulfur compounds, glycerol, propylene glycol and ethanol.

In a preferred embodiment, the invention relates to a method for preparing a drinkable foaming or foamable liquid, wherein the concentration of said hop oil compounds in said drinkable foaming or foamable liquid is in the range of 10 to 2000 ppb.

Examples of said hop oil compounds, such as hop monoterpenes, oxygenated hop monoterpenes, hop sesquiterpenes and oxygenated hop sesquiterpenes, are myrcene, humulene, caryophyllene, linalool, linalool oxides, citronellol, geraniol, nerol, geranyl acetate, alpha-terpineol, humulene epoxide I, humulene epoxide II, alpha-eudesmol, clovanediol, humulol, humuladienone and humulenol.

In a preferred embodiment, the invention relates to a method for preparing a drinkable foaming or foamable liquid, wherein said addition of said ingredients and ingredient mixtures comprises the addition from at least three different individual reservoirs;
wherein one of the three different individual reservoirs comprises a liquid comprising one or more carbohydrates;
wherein one of the three different individual reservoirs comprises a liquid comprising one or more alcohols with more than two carbon atoms and one or more esters with more than three carbon atoms;
wherein one of the three different individual reservoirs comprises a liquid comprising one or more hop bitter acids.

In another embodiment, the invention relates to a method for preparing a drinkable foaming or foamable liquid, preferably a foaming or foamable fermented-beverage liquid or fermented-beverage-like liquid, more preferably a foaming or foamable beer or beer-like beverage, most preferably a foaming or foamable low alcohol beer or beer-like beverage, stored in, offered in, served in or consumed from a container,
comprising mixing ingredients and ingredient mixtures in said container by adding said ingredients and ingredient mixtures to said container in an effective amount to obtain said drinkable foaming or foamable liquid, by adding said ingredients and ingredient mixtures from individual reservoirs comprising said ingredients or ingredient mixtures;
wherein the addition of said ingredients and ingredient mixtures comprises the addition of at least six members of the group of water, ethanol, carbon dioxide, a liquid comprising one or more carbohydrates, a liquid comprising one or more alcohols with more than two carbon atoms, a liquid comprising one or more esters with more than three carbon atoms, a liquid comprising one or more hop bitter acids, and a liquid comprising one or more botanical compounds;
   whereby at least one of said individual reservoirs comprises a liquid comprising one or more carbohydrates;
wherein at least one of said individual reservoirs comprises a liquid comprising one or more alcohols with more than two carbon atoms;
wherein at least one of said individual reservoirs comprises a liquid comprising one or more esters with more than three carbon atoms;
wherein at least one of said individual reservoirs comprises a liquid comprising one or more hop bitter acids;
wherein at least one of said individual reservoirs comprises a liquid comprising one or more botanical compounds;
wherein at least one of said liquids in one of said individual reservoirs also comprises one or more phenolic compounds and one or more nitrogenous compounds being whey proteins;
wherein at least one of said liquids in one of said individual reservoirs also comprises one or more organic acids with at least two carbon atoms;
wherein at least one of said liquids in one of said individual reservoir also comprises one or more hop oil compounds.

In a preferred embodiment, the addition of said ingredients and ingredient mixtures to said container is at least for two of said ingredients and ingredient mixtures at least partially simultaneously.

In a preferred embodiment, the addition of said ingredients and ingredient mixtures to said container is at least for two of said ingredients and ingredient mixtures at least partially sequentially.

In a more preferred embodiment, the addition of said ingredients and ingredient mixtures to said container is at least for two of said ingredients and ingredient mixtures at least partially simultaneously and is at least for two of said ingredients and ingredient mixtures at least partially sequentially.

In another embodiment, the invention relates to a method for preparing a drinkable foaming or foamable liquid, preferably a foaming or foamable fermented-beverage liquid or fermented-beverage-like liquid, more preferably a foaming or foamable beer or beer-like beverage, most preferably a foaming or foamable low alcohol beer or beer-like beverage, stored in, offered in, served in or consumed from a container,
comprising mixing ingredients and ingredient mixtures in said container by adding said ingredients and ingredient mixtures to said container in an effective amount to obtain said drinkable foaming or foamable liquid, by adding said ingredients and ingredient mixtures from individual reservoirs comprising said ingredients or ingredient mixtures;
wherein the addition of said ingredients and ingredient mixtures comprises the addition of at least six members of the group of water, ethanol, carbon dioxide, a liquid comprising one or more carbohydrates, a liquid comprising one or more alcohols with more than two carbon atoms and one or more esters with more than three carbon atoms, a liquid comprising one or more hop bitter acids, and a liquid comprising one or more botanical compounds;
wherein at least one of said individual reservoirs comprises a liquid comprising one or more carbohydrates;
wherein at least one of said individual reservoirs comprises a liquid comprising one or more alcohols with more than two carbon atoms and one or more esters with more than three carbon atoms;
wherein at least one of said individual reservoirs comprises a liquid comprising one or more hop bitter acids;
wherein at least one of said individual reservoirs comprises a liquid comprising one or more botanical compounds;
wherein at least one of said liquids in one of said individual reservoirs also comprises one or more phenolic compounds and one or more nitrogenous compounds being whey proteins;
wherein at least one of said liquids in one of said individual reservoirs also comprises one or more organic acids with at least two carbon atoms;
wherein at least one of said liquids in one of said individual reservoir also comprises one or more hop oil compounds.

In a preferred embodiment, the addition of said ingredients and ingredient mixtures to said container is at least for two of said ingredients and ingredient mixtures at least partially simultaneously.

In a preferred embodiment, the addition of said ingredients and ingredient mixtures to said container is at least for two of said ingredients and ingredient mixtures at least partially sequentially.

In a more preferred embodiment, the addition of said ingredients and ingredient mixtures to said container is at least for two of said ingredients and ingredient mixtures at least partially simultaneously and is at least for two of said ingredients and ingredient mixtures at least partially sequentially.

Such botanical compounds are typical ingredients of beers such as tripel beers, pale ale beers and brown beers. Such botanical compounds are typically part of botanical extracts. Sources of such botanical compounds are for example fruit juices, herb extracts, tea decoctions, peel infusions, seed extracts, pressed root juices, leave infusions.

In a preferred embodiment, the invention relates to a method for preparing a foaming or foamable liquid, wherein the concentration of said botanical compounds in said drinkable foaming or foamable liquid is in the range of 0 to 1000 ppm.

In a preferred embodiment, one or more of said liquids comprising ingredients or ingredient mixtures comprises one or more carbonyl compounds.

Examples of such carbonyl compounds are acetaldehyde, propanal, butanal, trans-2-butenal, 2-methyl-propanal, octanal, decanal, furfural, 5-methyl-furfural, 2,3-butanedione, decan-2-one and undecane-2-one.

In a preferred embodiment, the invention relates to a method wherein said drinkable foaming or foamable liquid is carbonated.

In a preferred embodiment, the invention relates to a method wherein said drinkable foaming of foamable liquid is prepared and ready for consumption in said container in less than 15 min, more preferably in less than 10 min, most preferably in less than 5 min.

In a preferred embodiment, the invention relates to a method wherein said drinkable foaming or foamable liquid can be consumed, preferably from said container, in less than 15 min, more preferably in less than 10 min, most preferably in less than 5 min, after initiating the method for preparing said foaming or foamable liquid.

In a preferred embodiment, the invention relates to a method enabling consumption of a drinkable foaming or foamable liquid essentially free of oxidative degradation products.

In a more preferred embodiment, the invention relates to a method wherein the concentration of trans-2-nonenal in said drinkable foaming or foamable liquid is below 0.1 ppb.

In a preferred embodiment, the invention relates to a method enabling consumption of a drinkable foaming or foamable liquid essentially free of photolytic degradation products.

In a more preferred embodiment, the invention relates to a method wherein the concentration of 3-methyl-2-butene-1-thiol in said drinkable foaming or foamable liquid is below 4 ppt.

In a preferred embodiment, the invention relates to a method wherein an individual reservoir comprises carbon dioxide, more preferably gaseous carbon dioxide.

In a preferred embodiment, the invention relates to a method wherein an individual reservoir comprises molecular nitrogen, more preferably gaseous molecular nitrogen.

In a preferred embodiment, the invention relates to a method wherein an individual reservoir comprises ethanol, more preferably liquid ethanol.

In a preferred embodiment, the invention relates to a method wherein the preparation of said liquid comprising one or more carbohydrates comprises a fermentation process.

In a preferred embodiment, the invention relates to a method wherein the preparation of said liquid comprising one or more carbohydrates comprises a brewing process.

In a preferred embodiment, the invention relates to a method wherein the preparation of said liquid comprising one or more carbohydrates comprises a roasting process.

In a preferred embodiment, the invention relates to a method wherein one or more of said liquids comprising ingredients or ingredient mixtures comprises water as a solvent.

In a preferred embodiment, the invention relates to a method wherein one or more of said liquids comprising ingredients or ingredient mixtures comprises an alcohol with at least two carbon atoms as a solvent.

In a more preferred embodiment, the invention relates to a method wherein one or more of said liquids comprising ingredients or ingredient mixtures comprises ethanol as a solvent.

In a more preferred embodiment, the invention relates to a method wherein one or more of said liquids comprising ingredients or ingredient mixtures comprises glycerol as a solvent.

In a more preferred embodiment, the invention relates to a method wherein one or more of said liquids comprising ingredients or ingredient mixtures comprises propylene glycol as a solvent.

In a preferred embodiment, the invention relates to a method wherein said container is made from glass.

In a more preferred embodiment, the invention relates to a method wherein said glass is UV-VIS-transmittant.

In a preferred embodiment, the invention relates to a method wherein said container is made from plastic.

In a more preferred embodiment, the invention relates to a method wherein said plastic is UV-VIS-transmittant.

In a preferred embodiment, the invention relates to a method wherein said container is made from metal, more preferably stainless steel.

In a preferred embodiment, the invention relates to a method wherein said container is made from cardboard.

In a preferred embodiment, the invention relates to a method wherein said container is made from stoneware.

In a preferred embodiment, the invention relates to a method wherein water is cooled prior to carbonisation, preferably to a temperature below 10 °C, more preferably to a temperature below 5 °C.

In a preferred embodiment, the invention relates to a method wherein carbonated water is cooled, preferably to a temperature below 10 °C, more preferably to a temperature below 5 °C.

In a preferred embodiment, the invention relates to a method wherein ethanol is added from an individual reservoir comprising ethanol.

In a preferred embodiment, the invention relates to a method not comprising heating to a temperature above 40 °C or cooking at a temperature above 60 °C of said ingredients or ingredient mixtures and not comprising heating to a temperature above 40 °C or cooking at a temperature above 60 °C of said drinkable foaming or foamable liquid.

In a preferred embodiment, the invention relates to a method not comprising pasteurising said drinkable foaming or foamable liquid.

In a preferred embodiment, the invention relates to a method not comprising pasteurising said drinkable foaming or foamable liquid at a temperature above 50 °C.

In a preferred embodiment, the invention relates to a method not comprising fermenting said ingredients, said ingredients mixtures or said drinkable foaming or foamable liquid.

In a preferred embodiment, the invention relates to a method not comprising the addition of agents or aids for removal of yeasts, proteins or polyphenols.

In a preferred embodiment, the invention relates to a method wherein water or a mixture comprising water is filtered.

In a preferred embodiment, the invention relates to a method wherein water or a mixture comprising water is contacted with a cation exchanger.

In a preferred embodiment, the invention relates to a method wherein water or a mixture comprising water is contacted with an anion exchanger.

In a preferred embodiment, the invention relates to a method wherein water or a mixture comprising water is contacted with an adsorbent for odour removal.

In a preferred embodiment, the invention relates to a method wherein water or a mixture comprising water is dechlorinated.

In a preferred embodiment, the invention relates to a method comprising the addition of inorganic salts, cations or anions.

In a more preferred embodiment, the invention relates to a method wherein said inorganic cations are a member of the group of K cations, Na cations, Fe cations, Cu cations, Se cations, Mn cations and Zn cations.

In a more preferred embodiment, the invention relates to a method wherein said inorganic anions are a member of the group of chloride anions, sulphate anions, sulphite anions and phosphate anions.

In a preferred embodiment, the invention relates to a method wherein said drinkable foaming or foamable liquid has a histamine concentration below 1 ppm.

In a preferred embodiment, the invention relates to a method wherein said drinkable foaming or foamable liquid has a gluten content below 20 ppm.

In a preferred embodiment, the invention relates to a method wherein said drinkable foaming or foamable liquid has a PRAL value in the range of - 1 to 0.

In a preferred embodiment, the invention relates to a method wherein said drinkable foaming or foamable liquid has a pH value above 6.

In a preferred embodiment, the invention relates to a method wherein the ABV percentage of said drinkable foaming or foamable liquid is below 0.5 %.

In a preferred embodiment, the invention relates to a method wherein said drinkable foaming or foamable liquid offered or served in said container has a NIBEM value in the range of 150 to 350.

In a preferred embodiment, the invention relates to a method wherein said drinkable foaming or foamable liquid is essentially free of organic acids with at least two carbon atoms.

In a more preferred embodiment, the invention relates to a method wherein the concentration of said organic acids with at least two carbon atoms in said foaming or foamable liquid is below 10 ppm.

In an embodiment, the invention relates to a device for preparing and dispensing, according to the method disclosed, a drinkable foaming or foamable liquid, preferably a foaming or foamable fermented-beverage liquid or fermented-beverage-like liquid, in a container,
comprising individual reservoirs comprising ingredients and ingredient mixtures;
wherein at least one of said individual reservoirs comprises a liquid comprising one or more carbohydrates;
wherein at least one of said individual reservoirs comprises a liquid comprising one or more alcohols with more than two carbon atoms;
wherein at least one of said individual reservoirs comprises a liquid comprising one or more esters with more than three carbon atoms;
wherein at least one of said liquids in one of said individual reservoirs also comprises one or more phenolic compounds;
wherein at least one of said liquids in one of said individual reservoirs also comprises one or more nitrogenous compounds being whey proteins;
wherein at least one of said liquids in one of said individual reservoirs also comprises one or more organic acids with at least two carbon atoms;
comprising a means or a combination of means to add said ingredients or ingredient mixtures and dispense to said container in an effective amount to obtain said foaming or foamable liquid;
wherein the addition of said ingredients or ingredient mixtures comprises the addition of a liquid comprising water, the addition of a liquid comprising one or more carbohydrates and the addition of a liquid comprising one or more alcohols with more than two carbon atoms and one or more esters with more than three carbon atoms.

In another embodiment, the invention relates to a device for preparing and dispensing, according to the method disclosed, a drinkable foaming or foamable liquid, preferably a foaming or foamable fermented-beverage liquid or fermented-beverage-like liquid, in a container,
comprising individual reservoirs comprising ingredients and ingredient mixtures;
wherein at least one of said individual reservoirs comprises a liquid comprising one or more carbohydrates;
wherein at least one of said individual reservoirs comprises a liquid comprising one or more alcohols with more than two carbon atoms and one or more esters with more than three carbon atoms;
wherein at least one of said liquids in one of said individual reservoirs also comprises one or more phenolic compounds;
wherein at least one of said liquids in one of said individual reservoirs also comprises one or more nitrogenous compounds being whey proteins;
wherein at least one of said liquids in one of said individual reservoirs also comprises one or more organic acids with at least two carbon atoms;
comprising a means or a combination of means to add said ingredients or ingredient mixtures and dispense to said container in an effective amount to obtain said foaming or foamable liquid;
wherein the addition of said ingredients or ingredient mixtures comprises the addition of a liquid comprising water, the addition of a liquid comprising one or more carbohydrates and the addition of a liquid comprising one or more alcohols with more than two carbon atoms and one or more esters with more than three carbon atoms.

In another embodiment, the invention relates to a device
wherein at least one of said individual reservoirs comprises a liquid comprising one or more hop bitter acids;
wherein optionally one of said individual reservoirs comprises a liquid comprising one or more hop oil compounds;
wherein the addition of said ingredients or ingredient mixtures comprises the addition of at least five members of the group of water, ethanol, carbon dioxide, a liquid comprising one or more carbohydrates, a liquid comprising one or more alcohols with more than two carbon atoms, a liquid comprising one or more esters with more than three carbon atoms, and a liquid comprising one or more hop bitter acids.

In another embodiment, the invention relates to a device
wherein at least one of said individual reservoirs comprises a liquid comprising one or more hop bitter acids;
wherein optionally one of said individual reservoirs comprises a liquid comprising one or more hop oil compounds;
wherein the addition of said ingredients or ingredient mixtures comprises the addition of at least five members of the group of water, ethanol, carbon dioxide, a liquid comprising one or more carbohydrates, a liquid comprising one or more alcohols with more than two carbon atoms and one or more esters with more than three carbon atoms, and a liquid comprising one or more hop bitter acids.

In another embodiment, the invention relates to a device
wherein at least one of said individual reservoirs comprises a liquid comprising one or more botanical compounds;
wherein the addition of said ingredients or ingredient mixtures comprises the addition of at least six members of the group of water, ethanol, carbon dioxide, a liquid comprising carbohydrates, a liquid comprising one or more alcohols with more than two carbon atoms, a liquid comprising one or more esters with more than three carbon atoms, a liquid comprising one or more hop bitter acids, and a liquid comprising one or more botanical compounds.

In another embodiment, the invention relates to a device
wherein at least one of said individual reservoirs comprises a liquid comprising one or more botanical compounds;
wherein the addition of said ingredients or ingredient mixtures comprises the addition of at least six members of the group of water, ethanol, carbon dioxide, a liquid comprising carbohydrates, a liquid comprising one or more alcohols with more than two carbon atoms and one or more esters with more than three carbon atoms, a liquid comprising one or more hop bitter acids, and a liquid comprising one or more botanical compounds.

In a preferred embodiment, the invention relates to a device wherein said drinkable foaming of foamable liquid is prepared and dispensed into said container in less than 15 min, more preferably in less than 10 min, most preferably in less than 5 min.

In a preferred embodiment, the invention relates to a device wherein said drinkable foaming or foamable liquid can be consumed, preferably from said container, within less than 15 min, more preferably in less than 10 min, most preferably in less than 5 min, after initiating the method for preparing said foaming or foamable liquid.

In a preferred embodiment, the invention relates to a device wherein said drinkable foaming or foamable liquid is ready for consumption, preferably from said container, within less than 15 min, more preferably in less than 10 min, most preferably in less than 5 min, after initiating the method for preparing said foaming or foamable liquid.

In a preferred embodiment, the invention relates to a device wherein at least one of said individual reservoirs comprises a liquid comprising one or more salts.

In a preferred embodiment, the invention relates to a device wherein at least one of said individual reservoirs comprises a liquid with one or more roasted aroma compounds.

In a preferred embodiment, the invention relates to a device wherein at least one of said individual reservoirs comprises a liquid with one or more herbal aroma compounds.

In a preferred embodiment, the invention relates to a device wherein at least one of said individual reservoirs comprises a liquid comprising one or more food-grade acids.

In a preferred embodiment, the invention relates to a device wherein at least one of said individual reservoirs comprises anti-oxidative agents.

In a preferred embodiment, the invention relates to a device wherein at least one of said individual reservoirs comprises antibacterial or antifungal agents.

In a preferred embodiment, the invention relates to a device enabling consumption of a drinkable foaming or foamable liquid essentially free of oxidative degradation products.

In a preferred embodiment, the invention relates to a device enabling consumption of a drinkable foaming or foamable liquid essentially free of photolytic degradation products.

In a preferred embodiment, the invention relates to a device wherein an individual reservoir comprises carbon dioxide, more preferably gaseous carbon dioxide.

In a preferred embodiment, the invention relates to a device wherein an individual reservoir comprises molecular nitrogen, more preferably gaseous molecular nitrogen.

In a preferred embodiment, the invention relates to a device wherein an individual reservoir comprises ethanol, more preferably liquid ethanol.

In another embodiment, the invention relates to a device wherein the preparation of said liquid comprising one or more carbohydrates comprises a fermentation process.

In another embodiment, the invention relates to a device wherein the preparation of said liquid comprising one or more carbohydrates comprises a brewing process.

In another embodiment, the invention relates to a device wherein the preparation of said liquid comprising one or more carbohydrates comprises a roasting process.

In a preferred embodiment, the invention relates to a device wherein said container is made from glass.

In a more preferred embodiment, the invention relates to a device wherein said glass is UV-VIS-transmittant.

In a preferred embodiment, the invention relates to a device wherein said container is made from plastic.

In a more preferred embodiment, the invention relates to a device wherein said plastic is UV-VIS-transmittant.

In a preferred embodiment, the invention relates to a device wherein said container is made from metal.

In a preferred embodiment, the invention relates to a device wherein said container is made from cardboard.

In a preferred embodiment, the invention relates to a device wherein said container is made from stoneware.

In a preferred embodiment, the invention relates to a device wherein said ingredients and ingredient mixtures are mixed in said container by individually adding one or more of said ingredients and ingredient mixtures to said container.

In a preferred embodiment, the invention relates to a device wherein said drinkable foaming or foamable liquid in said container is obtained by dispensing from an individual reservoir comprising one or more carbohydrates and an individual reservoir comprising one or more alcohols with more than two carbon atoms and one or more esters with more than three carbon atoms.

In another embodiment, the invention relates to a device wherein at least one of said liquids in one of said individual reservoirs also comprises one or more phenolic compounds;
wherein at least one of said liquids in one of said individual reservoirs also comprises one or more nitrogenous compounds being whey proteins;
wherein at least of said liquids in one of said individual reservoirs also comprises one or more organic acids with at least two carbon atoms.

In another embodiment, the invention relates to a device wherein said drinkable foaming or foamable liquid in said container is obtained by dispensing from an individual reservoir comprising one or more carbohydrates, an individual reservoir comprising one or more alcohols with more than two carbon atoms and one or more esters with more than three carbon atoms and an individual reservoir comprising one or more hop bitter acids.

In another embodiment, the invention relates to a device
wherein at least one of said individual reservoirs comprises a liquid comprising one or more hop bitter acids;
wherein at least one of said liquids in one of said individual reservoirs comprises one or more hop oil compounds.

In a preferred embodiment, the invention relates to a device comprising one or more mixing vessels for mixing ingredients or ingredient mixtures dispensed from at least two reservoirs comprising ingredients or ingredient mixtures to form a partial mixture.

In a preferred embodiment, the invention relates to a device comprising one or more mixing channels for mixing ingredients or ingredient mixtures dispensed from at least two reservoirs comprising ingredients or ingredient mixtures to form a partial mixture.

In a preferred embodiment, the invention relates to a device not comprising a means to heat or boil said ingredients or ingredient mixtures and not comprising a means to heat or boil said drinkable foaming or foamable liquid.

In a preferred embodiment, the invention relates to a device not comprising a means to pasteurise said drinkable foaming or foamable liquid.

In a preferred embodiment, the invention relates to a device not comprising a means to ferment said ingredients, said ingredients mixtures or said drinkable foaming or foamable liquid.

In a preferred embodiment, the invention relates to a device not comprising a means to add aids for removal of yeasts, proteins or polyphenols.

In a preferred embodiment, the invention relates to a device comprising one or more means or combinations of means to filter water or a mixture comprising water.

In a preferred embodiment, the invention relates to a device comprising at least one cation exchanger to be contacted with water or a mixture comprising water.

In a preferred embodiment, the invention relates to a device comprising at least one anion exchanger to be contacted with water or a mixture comprising water.

In a preferred embodiment, the invention relates to a device comprising at least one adsorbent for odour removal to be contacted with water or a mixture comprising water.

In a preferred embodiment, the invention relates to a device comprising one or more means or combinations of means to dechlorinate water or a mixture comprising water.

In a preferred embodiment, the invention relates to a device comprising one or more means or combinations of means to cool water or a mixture comprising water.

In a preferred embodiment, the invention relates to a device wherein at least one of said means is a heat exchanger.

In a preferred embodiment, the invention relates to a device comprising one or more compressors.

In a preferred embodiment, the invention relates to a device comprising one or more means or combinations of means to carbonate water or a mixture comprising water.

In a preferred embodiment, the invention relates to a device comprising one or more pressurized vessels comprising gaseous carbon dioxide.

In a preferred embodiment, the invention relates to a device comprising one or more means or combinations of means for pulse injection of carbon dioxide into water or a mixture comprising water.

In a preferred embodiment, the invention relates to a device wherein at least one individual reservoir comprising ingredients or ingredients mixtures is a vessel comprising carbonated water.

In a preferred embodiment, the invention relates to a device comprising one or more pumps.

In a more preferred embodiment, the invention relates to a device comprising one or more peristaltic pumps.

In a more preferred embodiment, the invention relates to a device wherein at least one of said pumps enables dispensing from an individual reservoir comprising ethanol.

In a more preferred embodiment, the invention relates to a device wherein at least one of said pumps enables dispensing from an individual reservoir comprising one or more carbohydrates.

In a preferred embodiment, the invention relates to a device wherein at least one of said pumps enables circulating or dispensing water or a mixture comprising water.

In a preferred embodiment, the invention relates to a device wherein at least one of said pumps enables dispensing carbonated water or a mixture comprising carbonated water and at least one of said pumps enables dispensing non-carbonated water or a mixture comprising non-carbonated water.

In a preferred embodiment, the invention relates to a device comprising one or more means or combinations of means enabling a sanitizing or cleaning cycle.

In a preferred embodiment, the invention relates to a device comprising one or more means or combinations of means enabling mixing of said ingredients and ingredient mixtures in said container by individually adding said ingredients and ingredient mixtures to said container.

In a preferred embodiment, the invention relates to a device comprising at least one means or at least one combination of means to add inorganic salts, cations or anions.

In a more preferred embodiment, the invention relates to a device wherein said inorganic cations are a member of the group of K cations, Na cations, Fe cations, Cu cations, Se cations, Mn cations and Zn cations.

In a more preferred embodiment, the invention relates to a device wherein said inorganic anions are a member of the group of chloride anions, sulphate anions, sulphite anions and phosphate anions.

In a preferred embodiment, the invention relates to a device comprising one or more reservoirs comprising water.

In a more preferred embodiment, the invention relates to a device comprising at least one reservoir comprising essentially only water.

In a preferred embodiment, the invention relates to a device comprising one or more carbonation tanks.

In a preferred embodiment, the invention relates to a device comprising one or more cooling units comprising one or more heat exchangers.

In a preferred embodiment, the invention relates to a device wherein at least one of the individual reservoirs comprising ingredients or ingredients mixtures is a syringe.

In a more preferred embodiment, the invention relates to a device wherein at least one syringe is dispensed from by means of a syringe pump.

In a preferred embodiment, the invention relates to a device comprising one or more pressure sensors.

In a more preferred embodiment, the invention relates to a device wherein at least one of said pressure sensors determines the pressure in at least one of said heat exchangers.

In a more preferred embodiment, the invention relates to a device wherein at least one of said pressure sensors determines the pressure in at least one of said pressurized vessels comprising gaseous carbon dioxide.

In a preferred embodiment, the invention relates to a device comprising one or more temperature sensors.

In a more preferred embodiment, the invention relates to a device wherein at least of said temperature sensors determines the temperature of a reservoir comprising water or a mixture comprising water.

In a more preferred embodiment, the invention relates to a device wherein at least one of said temperatures sensors determines the temperature of a carbonation tank.

In a preferred embodiment, the invention relates to a device comprising one or more pressure reducing valves.

In a more preferred embodiment, the invention relates to a device wherein at least one of said pressure reducing valves enables regulation of the carbon dioxide pressure of carbonated water or a mixture comprising water and carbon dioxide.

In a preferred embodiment, the invention relates to a device comprising one or more solenoid valves.

In a preferred embodiment, the invention relates to a device comprising one or more non return valves.

In a preferred embodiment, the invention relates to a device comprising one or more flow restrictors.

In a preferred embodiment, the invention relates to a device comprising one or more encoders.

In a preferred embodiment, the invention relates to a device comprising one or more controlling means or combinations of controlling means.

In a preferred embodiment, the invention relates to a device wherein the controlling means is a programmable logic controller.

In a preferred embodiment, the invention relates to a device comprising one or more printed circuit boards.

In a preferred embodiment, the invention relates to a device comprising one or more means or combinations of means for user interaction or as user interface.

In a more preferred embodiment, the invention relates to a device wherein said means for user interaction or as user interface is a push button, a switch, a key board, a touch screen, or the like.

In a preferred embodiment, the invention relates to a device wherein a user can select a drinkable foaming or foamable liquid on a means for user interaction or as user interface and the selected foaming or foamable liquid is prepared and dispensed in a container.

In a preferred embodiment, the invention relates to a device comprising a means or a combination of means to update, save and keep the method settings for a specific type of drinkable foaming or foamable liquid.

In a preferred embodiment, the invention relates to a device comprising a means or a combination of means to update, save and keep different method settings for different types of drinkable foaming or foamable liquid.

In a preferred embodiment, the invention relates to a device comprising a means or a combination of means to connect to externally stored method settings for the preparation of drinkable foaming or foamable liquids.

In a preferred embodiment, the invention relates to a device comprising a means or a combination of means to modify, update, save and keep the method settings for a specific type of drinkable foaming or foamable liquid.

In a preferred embodiment, the invention relates to a device comprising a means or a combination of means to determine and report the consumption level of an individual reservoir comprising ingredients or ingredient mixtures.

In a preferred embodiment, the invention relates to a device comprising a means or a combination of means to update, save and keep the consumption level information of an individual reservoir comprising ingredients or ingredient mixtures.

In a preferred embodiment, the invention relates to a device comprising a means or a combination of means to determine and report the consumption level of an individual reservoir comprising water.

In a preferred embodiment, the invention relates to a device comprising a means or a combination of means to determine and report the consumption level of an individual reservoir comprising carbon dioxide.

In a preferred embodiment, the invention relates to a device comprising a means or a combination of means to determine and report the consumption level of an individual reservoir comprising ethanol.

In a preferred embodiment, the invention relates to a device comprising a means or a combination of means to identify an individual consumer and to associate this individual user to an individual user account.

In a preferred embodiment, the invention relates to a device comprising a means or a combination of means to determine and report the alcohol consumption of an individual user on a specific time basis, more preferably 24 hours, most preferably 12 hours.

In a preferred embodiment, the invention relates to a device comprising a means or a combination of means to inform an individual user of his alcohol consumption during a specific time basis as a fraction of the national regulations or recommendations.

In a preferred embodiment, the invention relates to a device comprising a means or a combination of means to determine and report the sugar consumption of a single user on a specific time basis, more preferably 24 hours.

In a preferred embodiment, the invention relates to a device comprising a means or a combination of means to inform an individual user of his sugar consumption during a specific time basis as a fraction of the national regulations or recommendations.

In a preferred embodiment, the invention relates to a device comprising a means or a combination of means to modify, save and keep the method settings for an individual user and associate this individual user to an individual user account.

In a preferred embodiment, the invention relates to a device comprising a means or a combination of means to modify, save and keep the consumption preferences of an individual user and associate this individual user to an individual user account.

In a preferred embodiment, the invention relates to a device comprising a means or a combination of means to inform an individual user associated to an individual user account about the method settings and consumption preferences of one or more other individual users.

In a preferred embodiment, the invention relates to a device comprising a means or a combination of means enabling an individual user associated to an individual user account to share method settings and consumption preferences with one or more other individual users.

In a preferred embodiment, the invention relates to a device comprising a means or a combination of means enabling an individual user associated to an individual user account to use the method settings and consumption preferences of one or more other individual users.

In a preferred embodiment, the invention relates to a device comprising a means or a combination of means enabling scoring and ranking of method settings of one or more other individual users.

In a preferred embodiment, the invention relates to a device comprising a means or a combination of means enabling determining and registering the consumption of an individual user.

In a more preferred embodiment, the invention relates to a device enabling billing the consumption of an individual user by a provider.

In a more preferred embodiment, the invention relates to a device enabling billing the consumption of an individual user by a vending machine.

In an embodiment, the invention relates to a device for preparing and dispensing a drinkable foaming or foamable liquid from a plurality of ingredients, preferably a foaming or foamable fermented-beverage liquid or fermented-beverage-like liquid, the device comprising
a first reservoir (66) configured to comprise a liquid comprising one or more carbohydrates;
a second reservoir (67) configured to comprise a liquid comprising one or more alcohols having more than two carbon atoms and one or more esters with more than three carbon atoms;
a third reservoir (57) fluidly connected to the dispensing means and configured to comprise a liquid comprising one or more hop bitter acids;
a carbonated water system (63, 64, 65) configured to provide carbonated water; and
a dispensing means fluidly connected to at least the first and the second reservoir, wherein the dispensing means is configured to receive at least a predetermined amount of the liquid from the first reservoir, a predetermined amount of the liquid from the second reservoir, and a predetermined amount of the carbonated water from the carbonated water system;
wherein the dispensing means is configured to dispense the received liquids to an external container to obtain said drinkable foaming or foamable liquid.

In a preferred embodiment, the invention relates to a device for preparing and dispensing a drinkable foaming or foamable liquid from a plurality of ingredients, preferably a foaming or foamable fermented-beverage liquid or fermented-beverage-like liquid, the device further comprising
at least first dosing means (4) and a second dosing means (5);
wherein the first dosing means is fluidly connected to the first reservoir and the dispensing means and configured to provide the dispensing means with the predetermined amount of the liquid from the first reservoir; and
wherein the second dosing means is fluidly connected to the second reservoir and the dispensing means and configured to provide the dispensing means with the predetermined amount of the liquid from the second reservoir.

In a more preferred embodiment, the invention relates to a device for preparing and dispensing a drinkable foaming or foamable liquid from a plurality of ingredients, preferably a foaming or foamable fermented-beverage liquid or fermented-beverage-like liquid, the device further comprising at least one of or a combination of the following:
a fourth reservoir (58) fluidly connected to the dispensing means and configured to comprise a liquid comprising one or more hop oil compounds;
a fifth reservoir (59) fluidly connected to the dispensing means and configured to comprise a liquid comprising one or more botanical compounds;
wherein the dispensing means is further configured to receive at least a predetermined amount of the liquid from the fourth reservoir, and at least a predetermined amount of the fifth reservoir and is configured to dispense the received liquids to the external container to obtain said drinkable foaming or foamable liquid.

In a preferred embodiment, the invention relates to a device for preparing and dispensing a drinkable foaming or foamable liquid from a plurality of ingredients, preferably a foaming or foamable fermented-beverage liquid or fermented-beverage-like liquid, the device further comprising at least one mixing vessel for at least partially mixing ingredients of ingredients mixtures from at least the first and the second reservoir.

In a more preferred embodiment, the invention relates to a device for preparing and dispensing a drinkable foaming or foamable liquid from a plurality of ingredients, preferably a foaming or foamable fermented-beverage liquid or fermented-beverage-like liquid, wherein the at least one mixing vessel is a mixing channel arranged between at least the first and the second reservoir and the dispensing means.

In a more preferred embodiment, the invention relates to a device for preparing and dispensing a drinkable foaming or foamable liquid from a plurality of ingredients, preferably a foaming or foamable fermented-beverage liquid or fermented-beverage-like liquid,
wherein the carbonated water system comprises a reservoir comprising a liquid comprising water (63) configured for holding a liquid comprising water, a reservoir comprising carbon dioxide (64) configured for holding carbon dioxide, and a carbonation reservoir (65);
wherein the reservoir comprising a liquid comprising water and the reservoir comprising carbon dioxide are fluidly connected to the carbonation reservoir such that the carbonation reservoir can receive water and carbon dioxide from the reservoir comprising a liquid comprising water to carbonize the received liquid comprising water using the received carbon dioxide;
and wherein the carbonation reservoir is fluidly connected to the dispensing means.

In a more preferred embodiment, the invention relates to a device for preparing and dispensing a drinkable foaming or foamable liquid from a plurality of ingredients, preferably a foaming or foamable fermented-beverage liquid or fermented-beverage-like liquid, wherein the carbonated water system comprises a means for pulse injection of carbon dioxide received from the reservoir comprising carbon dioxide (64) into a liquid comprising water held by the carbonation reservoir and received from the reservoir comprising a liquid comprising water (63).

In a most preferred embodiment, the invention relates to a device for preparing and dispensing a drinkable foaming or foamable liquid from a plurality of ingredients, preferably a foaming or foamable fermented-beverage liquid or fermented-beverage-like liquid, comprising a heat exchanger configured to cool a fluid, wherein the heat exchanger is arranged upstream of the carbonation reservoir such that the water received from the reservoir comprising a liquid comprising water can be cooled.

In an embodiment, the invention relates to a combination for use in the preparation of a drinkable foaming or foamable liquid, preferably a foaming or foamable fermented-beverage liquid or fermented-beverage-like liquid, stored in, offered in, served in or consumed from a container, said combination
comprising at least one individual means to supply a liquid comprising water or carbonated water or at least one individual reservoir comprising a liquid comprising water or carbonated water;
comprising at least one individual reservoir comprising a liquid comprising one or more carbohydrates;
comprising at least one individual reservoir comprising a liquid comprising one or more alcohols with more than two carbon atoms;
comprising at least one individual reservoir comprising a liquid comprising one or more esters with more than three carbon atoms;
wherein at least one of said liquids in one of said individual reservoirs also comprises one or more phenolic compounds;
wherein at least one of said liquids in one of said individual reservoirs also comprises one or more nitrogenous compounds being whey proteins; and wherein at least one of said liquids in one of said individual reservoirs also comprises one or more organic acids with at least two carbon atoms.

In a preferred embodiment, the invention relates to a combination for use in the preparation of a drinkable foaming or foamable liquid, more preferably a foaming or foamable fermented-beverage liquid or fermented-beverage-like liquid, stored in, offered in, served in or consumed from a container, said combination
comprising at least one individual means to supply a liquid comprising water or carbonated water or at least one individual reservoir comprising a liquid comprising water or carbonated water;
comprising at least one individual reservoir comprising a liquid comprising one or more carbohydrates;
comprising at least one individual reservoir comprising a liquid comprising one or more alcohols with more than two carbon atoms and one or more esters with more than three carbon atoms;
wherein at least one of said liquids in one of said individual reservoirs also comprises one or more phenolic compounds;
wherein at least one of said liquids in one of said individual reservoirs also comprises one or more nitrogenous compounds being whey proteins; and
wherein at least one of said liquids in one of said individual reservoirs also comprises one or more organic acids with at least two carbon atoms.

In a more preferred embodiment, the invention relates to a combination for use in the preparation of a foaming or foamable beer or beer-like beverage, most preferably a foaming or foamable low-alcohol beer, stored in, offered in, served in or consumed from a container, said combination
comprising at least one individual means to supply a liquid comprising water or carbonated water or at least one individual reservoir comprising a liquid comprising water or carbonated water;
comprising at least one individual reservoir comprising ethanol, preferably liquid ethanol;
comprising at least one individual reservoir comprising a liquid comprising one or more carbohydrates;
comprising at least one individual reservoir comprising a liquid comprising one or more alcohols with more than two carbon atoms and one or more esters with more than three carbon atoms;
comprising at least one individual reservoir comprising a liquid comprising one or more hop bitter acids;
wherein at least one of said liquids in one of said individual reservoirs also comprises one or more phenolic compounds;
wherein at least one of said liquids in one of said individual reservoirs also comprises one or more nitrogenous compounds being whey proteins;
wherein at least one of said liquids in one of said individual reservoirs also comprises one or more organic acids with at least two carbon atoms; and
wherein at least one of said liquids in one of said individual reservoirs also comprises one or more hop oil compounds.

In a more preferred embodiment, the invention relates to a combination for use in the preparation of a foaming or foamable beer or beer-like beverage, most preferably a foaming or foamable beer, stored in, offered in, served in or consumed from a container, said combination
comprising at least one individual means to supply a liquid comprising water or carbonated water or at least one individual reservoir comprising a liquid comprising water or carbonated water;
comprising at least one individual reservoir comprising ethanol, preferably liquid ethanol;
comprising at least one individual reservoir comprising a liquid comprising one or more carbohydrates;
comprising at least one individual reservoir comprising a liquid comprising one or more alcohols with more than two carbon atoms and one or more esters with more than three carbon atoms;
comprising at least one individual reservoir comprising a liquid comprising one or more hop bitter acids;
comprising at least one individual reservoir comprising carbon dioxide, preferably gaseous carbon dioxide;
wherein at least one of said liquids in one of said individual reservoirs also comprises one or more phenolic compounds;
wherein at least one of said liquids in one of said individual reservoirs also comprises one or more nitrogenous compounds being whey proteins;
wherein at least one of said liquids in one of said individual reservoirs also comprises one or more organic acids with at least two carbon atoms;
wherein at least one of said liquids in one of said individual reservoirs also comprises one or more hop oil compounds; and
wherein at least one of said liquids in one of said individual reservoirs also comprises one or more botanical compounds.

The application relates to a combination for use in the preparation of a foaming or foamable beer or beer-like beverage, preferably a foaming or foamable beer, stored in, offered in, served in or consumed from a container,
wherein said liquid comprising one or more carbohydrates further comprises at least two members of the group of nitrogenous compounds, phenolic compounds, sulfur compounds, ethanol, glycerol, propylene glycol, alcohols with more than two carbon atoms, esters with more than three carbon atoms, organic acids with at least two carbon atoms, salts, hop bitter compounds and hop oil compounds; and/or
wherein said liquid comprising one or more alcohols with more than two carbon atoms and one or more esters with more than three carbon atoms further also comprises at least one organic acid selected from the group of acetic acid, propanoic acid, butanoic acid, 2-methylpropanoic acid, pentanoic acid, 2-methylbutanoic acid, 3-methylbutanoic acid, octanoic acid, decanoic acid, lactic acid, pyruvic acid, succinic acid, caffeic acid, cinnamic acid, para-coumaric acid, ferulic acid, gallic acid, hydroxybenzoic acid, salicylic acid, sinapic acid, syringic acid and vanillic acid; and/or
wherein said liquid comprising one or more alcohols with more than two carbon atoms and one or more esters with more than three carbon atoms further also comprises at least two members of the group of nitrogenous compounds, phenolic compounds, sulfur compounds, ethanol, glycerol, propylene glycol, inorganic salts, inorganic cations, inorganic anions, hop bitter compounds and hop oil compounds.

It will be understood by the skilled person that the features of the preferred embodiments and any features of other preferred embodiments of the device, combination for use and the method may be combined as considered appropriate to the person of ordinary skill in the art, and not only in the particular combinations as described here above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

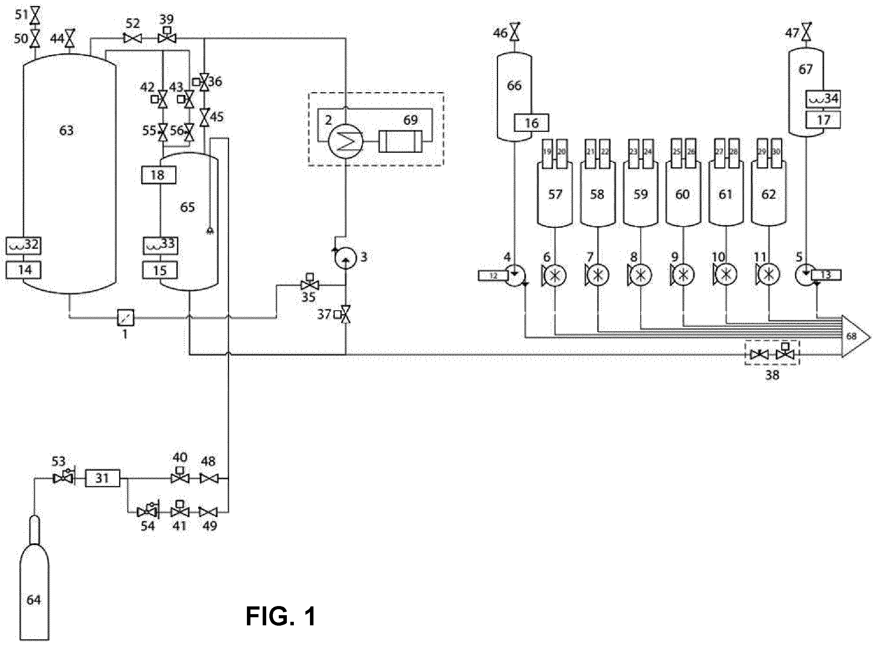

Figure 1 schematically illustrates a device or system of devices for preparing and dispensing a drinkable foaming or foamable liquid from a plurality of ingredients or ingredient mixtures according to an exemplary embodiment.

### Description of embodiments.

The description and drawings merely illustrate the principles of the present invention. It will thus be appreciated that those skilled in the art will be able to devise various arrangements that, although not explicitly described or shown herein, embody the principles of the present application. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

Figure 1 schematically illustrates a device or system of devices for preparing and dispensing a drinkable foaming or foamable liquid from a plurality of ingredients according to an exemplary embodiment. The following reference numerals are used to identify the elements shown in figure 1.

| **Reference number** | **Description** |
|---|---|
| **1** | Water filter |
| **2** | Heat exchanger |
| **3** | Fluid displacement means Diaphragm pump |
| **4** | Dosing means, for example a peristaltic pump |
| **5** | Dosing means, for example peristaltic pump |
| **6** | Dosing means, for example a syringe pump |
| **7** | Dosing means, for example a syringe pump |
| **8** | Dosing means, for example a syringe pump |
| **9** | Dosing means, for example a syringe pump |
| **10** | Dosing means, for example a syringe pump |
| **11** | Dosing means, for example a syringe pump |
| **12** | Encoder |
| **13** | Encoder |
| **14** | Level switch |
| **15** | Level switch |
| **16** | Level switch |
| **17** | Level switch |
| **18** | Level switch |
| **19** | Limit switch |
| **20** | Limit switch |
| **21** | Limit switch |
| **22** | Limit switch |
| **23** | Limit switch |
| **24** | Limit switch |
| **25** | Limit switch |
| **26** | Limit switch |
| **27** | Limit switch |
| **28** | Limit switch |
| **29** | Limit switch |
| **30** | Limit switch |
| **31** | Pressure sensor |
| **32** | Temperature sensor |
| **33** | Temperature sensor |
| **34** | Temperature sensor |
| **35** | Valve |
| **36** | Valve |
| **37** | Valve |
| **38** | Valve |
| **39** | Valve |
| **40** | Valve |
| **41** | Valve |
| **42** | Valve |
| **43** | Valve |
| **44** | Non return valve |
| **45** | Non return valve |
| **46** | Non return valve |
| **47** | Non return valve |
| **48** | Non return valve |
| **49** | Non return valve |
| **50** | Non return valve |
| **51** | Non return valve |
| **52** | Non return valve |
| **53** | Pressure reducing valve |
| **54** | Pressure reducing valve |
| **55** | Flow restrictor |
| **56** | Flow restrictor |
| **57** | Third Reservoir |
| **58** | Fourth Reservoir |
| **59** | Fifth Reservoir |
| **60** | Sixth Reservoir |
| **61** | Seventh Reservoir |
| **62** | Eighth Reservoir |
| **63** | Water Reservoir |
| **64** | CO2 Reservoir |
| **65** | Carbonation reservoir |
| **66** | First reservoir |
| **67** | Second reservoir |
| **68** | Dispensing means |
| **69** | Heat exchanger, for example a cooling unit |

As an example, a device according to the present invention is based on a combination of following parts:
- an individual reservoir containing carbon dioxide gas connected to a carbonation tank by tubes or pipes, with on the connections also one or more pressure reducing valves, solenoid valves, non return valves and pressure sensors;
- an individual reservoir containing liquid water with a temperature sensor connected to a carbonation tank with a temperature sensor by tubes or pipes, with on the connections also one or more non return valves, solenoid valves and flow restrictors;
- a cooling unit containing a heat exchanger, connected to a water tank and a carbonation tank by tubes or pipes, with on the connections one or more solenoid valves, non return valves, pressure sensors and peristaltic pumps;
- an individual reservoir containing ethanol with on a tube or pipe connection a peristaltic pump and an encoder and with a level switch;
- multiple individual reservoirs with on a tube or pipe connection with one or more dosing meanss, with one reservoir comprising carbohydrates, one reservoir comprising hop bitter acids and one reservoir comprising alcohols with more than two carbon atoms and esters with more than three carbon atoms.

### Example 1

As an example, the combination of individual reservoirs comprising ingredients or ingredient mixtures can be as in Table 2.

**Table 2.**

| **first reservoir** | comprising **carbon dioxide** | | | |
|---|---|---|---|---|
| **reservoir 2** | comprising **water** | | | |
| **reservoir 3** | comprising **ethanol** | | | |
| **reservoir 4** | comprising **carbohydrates** | comprising malt extract | comprising maltodextrin (29 wt.%) | also comprising protein (2.9 wt.%), glycerol, sodium chloride, sodium sulphate |
| **reservoir 5** | comprising **hop bitter acids** | comprising isomerized hop extract | comprising hop iso-alpha-acid (10 wt.%) | also comprising eugenol, iso-eugenol, myrcene, linalool, pinene |
| **reservoir** | comprising **alcohols** | | comprising ethyl | also comprising |
| **6** | **with more than two carbon atoms and esters with more than three carbon atoms** | | acetate, 2-methylbutyl isobutanoate, isoamyl acetate, propanol, butanol, hexanol | propanoic acid, lactic acid, butanoic acid, hexanoic acid, furfural, nonanal |

With this combination of reservoirs, a foaming 'blonde beer' liquid can be prepared, with following specifications:
6 % ABV, 5 g/l CO₂, 32000 ppm maltodextrins, 45000 ppm proteins, 18 ppm propanol, 24 ppm butanol, 38 ppm hexanol, 90 ppm ethyl acetate, 10 ppm 2-methylbutyl isobutanoate, 15 ppm isoamyl acetate, 25 ppm propanoic acid, 100 ppm lactic acid, 2 ppm butanoic acid, 0.5 ppm hexanoic acid, 20 ppm isohumulones, 105 ppm eugenol, 75 ppm iso-eugenol, 250 ppb myrcene, 350 ppb linalool, 100 ppm pinene, 10 ppm glycerol, 250 ppm sodium chloride and 450 ppm sodium sulphate.

### Example 2

As an example, with a method according to the present invention using a device according to the present invention following beverages in a container can be prepared, each in less than 5 min, and all three together in less than 30 min, as shown in Table 3.

**Table 3.**

| | |
|---|---|
| Beer 1: low-alcoholic 'blonde' beer | **0.5 % ABV, 3.5 g/l CO₂**, 32000 ppm maltodextrins, 45000 ppm proteins, 18 ppm propanol, 24 ppm butanol, 38 ppm hexanol, 90 ppm ethyl acetate, 10 ppm 2-methylbutyl isobutanoate, 15 ppm isoamyl acetate. 25 ppm propanoic acid, 100 ppm lactic acid, 2 ppm butanoic acid, 0.5 ppm hexanoic acid, **15 ppm isohumulones, 78.75 ppm eugenol, 56.25 ppm iso-eugenol, 187,5 ppb myrcene, 262,5 ppb linalool, 75 ppm pinene,** 10 ppm glycerol, 250 ppm sodium chloride and 450 ppm sodium sulphate |
| Beer 2: 'blonde' beer (as in Example 1) | **6 % ABV, 5 g/l CO₂**, 32000 ppm maltodextrins, 45000 ppm proteins, 18 ppm propanol, 24 ppm butanol, 38 ppm hexanol, 90 ppm ethyl acetate, 10 ppm 2-methylbutyl isobutanoate, 15 ppm |
| | isoamyl acetate, 25 ppm propanoic acid, 100 ppm lactic acid, 2 ppm butanoic acid, 0.5 ppm hexanoic acid, **20 ppm isohumulones, 105 ppm eugenol, 75 ppm iso-eugenol, 250 ppb myrcene, 350 ppb linalool, 100 ppm pinene,** 10 ppm glycerol, 250 ppm sodium chloride and 450 ppm sodium sulphate |
| Beer 3: bitter 'blonde' beer | **8 % ABV, 6 g/l CO₂,** 32000 ppm maltodextrins, 45000 ppm proteins, 18 ppm propanol, 24 ppm butanol, 38 ppm hexanol, 90 ppm ethyl acetate, 10 ppm 2-methylbutyl isobutanoate, 15 ppm isoamyl acetate, 25 ppm propanoic acid, 100 ppm lactic acid, 2 ppm butanoic acid, 0.5 ppm hexanoic acid, **40 ppm isohumulones, 210 ppm eugenol, 150 ppm iso-eugenol, 500 ppb myrcene, 700 ppb linalool, 200 ppm pinene,** 10 ppm glycerol, 250 ppm sodium chloride and 450 ppm sodium sulphate |

## Claims

1. A combination for use in the preparation of a drinkable foaming or foamable liquid, preferably a foaming or foamable fermented-beverage liquid or fermented-beverage-like liquid, stored in, offered in, served in, or consumed from a container, said combination comprising
at least one individual means to supply a liquid comprising water or carbonated water or at least one individual reservoir comprising a liquid comprising water or carbonated water;
at least one individual reservoir comprising a liquid comprising one or more carbohydrates;
at least one individual reservoir comprising a liquid comprising one or more alcohols with more than two carbon atoms and one or more esters with more than three carbon atoms;
at least one individual reservoir comprising a liquid comprising one or more hop bitter acids; wherein each of said individual reservoirs is a different reservoir;
wherein at least one of said liquids in one of said individual reservoirs also comprises one or more phenolic compounds;
wherein at least one of said liquids in one of said individual reservoirs also comprises one or more whey proteins; and
wherein at least one of said liquids in one of said individual reservoirs also comprises one or more organic acids with at least two carbon atoms.

2. The combination for use according to claim 1,
wherein said carbohydrates are selected from the group of mono-, di-, and trisaccharides (such as glucose, fructose, sucrose, maltose, and maltotriose), oligosaccharides, polysaccharides (with up to 250 glucose units), alpha-glucans (with mainly DP values between 4 and 34 and a smaller fraction with DP values above 35), and beta-glucans;
wherein said alcohols with more than two carbon atoms are selected from the group of 1-propanol, 2-propanol, 2-methyl-1-propanol, 2-methyl-butanol, 3-methyl-1-butanol, 2-phenylethanol, 1-octen-3-ol, 2-decanol, and glycerol;
wherein said esters with more than three carbon atoms are selected from the group of ethyl acetate, isoamyl acetate, isobutyl acetate, hexyl acetate, 2-phenylethyl acetate, ethyl butanoate, ethyl pentanoate, ethyl 2-methylbutanoate, ethyl hexanoate, ethyl octanoate, isoamyl octanoate, ethyl nicotinate, and ethyl decanoate;
wherein said phenolic compounds are selected from the group of monomeric phenols (such as 4-vinyl guaiacol), phenolic alcohols (such as tyrosol), phenolic acids such as para-coumaric acid, ferulic acids, vanillic acids, gallic acids, caffeic acids, syringic acids, and sinapic acids, phenolic amines and amino acids such as hordenine, tyramine, N-methyltyramine, tyrosamine and tyrosine, flavonoids and catechins such as (+)-catechin and (+)-epicatechin, antho-cyanogens such as leucocyanidin, leucopelargonidin, and leucodelphinidin, flavonols such as quercetin, kaempferol, myricetin, iso-quercitin, astragalin and, nutin, and condensed polyphenols such as dimeric catechins and oligomeric and polymeric derivatives of catechins, and anthocyanogens;
and
wherein said organic acids with at least two carbon atoms are selected from the group of acetic acid, propanoic acid, butanoic acid, 2-methylpropanoic acid, pentanoic acid, 2-methylbutanoic acid, 3-methylbutanoic acid, octanoic acid, decanoic acid, lactic acid, pyruvic acid, succinic acid, caffeic acid, cinnamic acid, para-coumaric acid, ferulic acid, gallic acid, hydroxybenzoic acid, salicylic acid, sinapic acid, syringic acid, and vanillic acid.

3. The combination for use according to any one of the previous claims, in the preparation of a foaming, or foamable beer or beer-like beverage, most preferably a foaming or foamable low-alcohol beer, stored in, offered in, served in or consumed from a container, said combination comprising
at least one individual means to supply a liquid comprising water or carbonated water or at least one individual reservoir comprising a liquid comprising water or carbonated water;
at least one individual reservoir comprising ethanol, preferably liquid ethanol;
at least one individual reservoir comprising a liquid comprising one or more carbohydrates; and
at least one individual reservoir comprising a liquid comprising one or more alcohols with more than two carbon atoms, and one or more esters with more than three carbon atoms; and
at least one individual reservoir comprising a liquid comprising one or more hop bitter acids;
wherein each of said individual reservoirs is a different reservoir;
wherein at least one of said liquids in one of said individual reservoirs also comprises one or more phenolic compounds;
wherein at least one of said liquids in one of said individual reservoirs also comprises one or more whey proteins;
and
wherein at least one of said liquids in one of said individual reservoirs also comprises one or more hop oil compounds.

4. The combination for use according to claim 3,
wherein said hop bitter acids are selected from the group of isohumulones, dihydro-isohumulones, tetrahydro-isohumulones, hexahydro-isohumulones, humulones, reduced humulones, hulupones, and reduced hulupones; and
wherein said hop oil compounds are selected from the group of hop monoterpenes, oxygenated hop monoterpenes, hop sesquiterpenes and oxygenated hop sesquiterpenes, myrcene, humulene, caryophyllene, linalool, linalool oxides, citronellol, geraniol, nerol, geranyl acetate, alpha-terpineol, humulene epoxide I, humulene epoxide II, alpha-eudesmol, clovanediol, humulol, humuladienone, and humulenol.

5. The combination for use, according to any of the claims 1 to 4, in the preparation of a foaming or foamable beer or beer-like beverage, most preferably a foaming or foamable beer, stored in, offered in, served in, or consumed from a container, said combination comprising
at least one individual means to supply a liquid comprising water or carbonated water or at least one individual reservoir comprising a liquid comprising water or carbonated water;
at least one individual reservoir comprising ethanol, preferably liquid ethanol; comprising at least one individual reservoir comprising a liquid comprising one or more carbohydrates;
at least one individual reservoir comprising a liquid comprising one or more alcohols with more than two carbon atoms, and one or more esters with more than three carbon atoms;
at least one individual reservoir comprising a liquid comprising one or more hop bitter acids; and
at least one individual reservoir comprising carbon dioxide, preferably gaseous carbon dioxide;
wherein each of said individual reservoirs is a different reservoir;
wherein at least one of said liquids in one of said individual reservoirs also comprises one or more phenolic compounds;
wherein at least one of said liquids in one of said individual reservoirs also comprises one or more whey proteins;
wherein at least one of said liquids in one of said individual reservoirs also comprises one or more organic acids with at least two carbon atoms; and
wherein at least one of said liquids in one of said individual reservoirs also comprises one or more hop oil compounds; and wherein at least one of said liquids in one of said individual reservoirs also comprises one or more botanical compounds.

6. The combination for use, according to any of the claims 1 to 5,
wherein said liquid comprising one or more carbohydrates further comprises at least two members of the group of whey proteins, phenolic compounds, sulfur compounds, ethanol, glycerol, propylene glycol, alcohols with more than two carbon atoms, esters with more than three carbon atoms, organic acids with at least two carbon atoms, inorganic cations and anions, hop bitter acids, and hop oil compounds;
wherein said sulfur compounds are selected from the group of hydrogen sulfide, sulfur dioxide, dimethyl sulfide, methionol, methional, methyl thioacetate, carbon disulfide, methanethiol, ethylene sulfide, ethanethiol, propanethiol, diethyl sulfide, dimethyl disulfide, diethyl disulfide, dimethyl trisulfide, ethyl thioacetate, and 3-methyl-2-butene-1-thiol; and
wherein said inorganic cations and anions are selected from the group of K cations, Na cations, Fe cations, Cu cations, Se cations, Mn cations, Zn cations, chloride anions, sulphate anions, sulphite anions, and phosphate anions.

7. A device for preparing and dispensing a drinkable foaming or foamable liquid from a plurality of ingredients, preferably a foaming or foamable fermented-beverage liquid or fermented-beverage-like liquid, the device comprising
a first reservoir (66) configured to comprise a liquid comprising one or more carbohydrates;
a second reservoir (67) configured to comprise a liquid comprising one or more alcohols with more than two carbon atoms, and one or more esters with more than three carbon atoms;
a third reservoir (57) fluidly connected to the dispensing means and configured to comprise a liquid comprising one or more hop bitter acids;
a further reservoir fluidly connected to the dispensing means and configured to comprise a liquid comprising one or more whey proteins;
a carbonated water system (63, 64, 65) configured to provide carbonated water; and
a dispensing means fluidly connected to at least the first and the second reservoir, wherein the dispensing means is configured to receive at least a predetermined amount of the liquid from the first reservoir, a predetermined amount of the liquid from the second reservoir, and a predetermined amount of the carbonated water from the carbonated water system; and
wherein the dispensing means is configured to dispense the received liquids to an external container to obtain said drinkable foaming or foamable liquid.

8. The device according to claim 7,
wherein the first dosing means is fluidly connected to the first reservoir and the dispensing means, and configured to provide the dispensing means with the predetermined amount of the liquid from the first reservoir; and
wherein the second dosing means is fluidly connected to the second reservoir, and the dispensing means and configured to provide the dispensing means with the predetermined amount of the liquid from the second reservoir.

9. The device according to claims 7 or 8, the device further comprising at least one of or a combination of the following:
a fourth reservoir (58) fluidly connected to the dispensing means and configured to comprise a liquid comprising one or more hop oil compounds; and
a fifth reservoir (59) fluidly connected to the dispensing means and configured to comprise a liquid comprising one or more botanical compounds;
wherein the dispensing means is further configured to receive at least one of a predetermined amount of the liquid from the fourth reservoir, and at least a predetermined amount of the fifth reservoir, and is configured to dispense the received liquids to the external container to obtain said drinkable foaming or foamable liquid.

10. The device according to any of the claims 7 to 9, further comprising at least one mixing vessel for at least partially mixing ingredients or ingredients mixtures from at least the first and second reservoir; preferably, wherein the at least one mixing vessel is a mixing channel arranged between at least the first and the second reservoir, and the dispensing means.

11. The device according to any of the claims 7 to 10,
wherein the carbonated water system comprises a reservoir comprising a liquid comprising water (63) configured for holding a liquid comprising water, a reservoir comprising carbon dioxide (64) configured for holding carbon dioxide, and a carbonation reservoir (65);
wherein the reservoir comprising a liquid comprising water and the reservoir comprising carbon dioxide are fluidly connected to the carbonation reservoir such that the carbonation reservoir can receive water and carbon dioxide from the reservoir comprising a liquid comprising water to carbonize the received liquid comprising water using the received carbon dioxide; and
wherein the carbonation reservoir is fluidly connected to the dispensing means.

12. The device according to any of the claims 7 to 11, wherein the carbonated water system comprises a means for pulse injection of carbon dioxide received from the reservoir comprising carbon dioxide (64) into a liquid comprising water held by the carbonation reservoir, and received from the reservoir comprising a liquid comprising water (63).

13. The device according to any of the claims 7 to 12, comprising a heat exchanger configured to cool a fluid, wherein the heat exchanger is arranged upstream of the carbonation reservoir, such that the water received from the reservoir comprising a liquid comprising water can be cooled.

14. A method for preparing a foaming or foamable beer or beer-like beverage, preferably a foaming or foamable low alcohol beer or beer-like beverage, stored in, offered in, served in, or consumed from a container, said method comprising: providing a combination comprising
at least one individual reservoir comprising a liquid comprising one or more carbohydrates;
at least one individual reservoir comprising a liquid comprising one or more alcohols with more than two carbon atoms;
at least one individual reservoir comprising a liquid comprising one or more esters with more than three carbon atoms; and
at least one individual reservoir comprising a liquid comprising one or more hop bitter acids;
wherein the addition of said ingredients and ingredient mixtures comprises the addition of at least six members of the group of water, ethanol, carbon dioxide, a liquid comprising one or more carbohydrates, a liquid comprising one or more alcohols with more than two carbon atoms, and one or more esters with more than three carbon atoms, a liquid comprising one or more hop bitter acids;
wherein at least one of said liquids in one of said individual reservoirs also comprises one or more phenolic compounds;
wherein at least one of said liquids in one of said individual reservoirs also comprises one or more whey proteins;
wherein at least one of said liquids in one of said individual reservoirs also comprises one or more organic acids with at least two carbon atoms; and
wherein at least one of said liquids in one of said individual reservoirs also comprises one or more hop oil compounds.

15. The method according to claim 14, for preparing a foaming or foamable beer or beer-like beverage, preferably a foaming or foamable low alcohol beer or beer-like beverage, stored in, offered in, served in, or consumed from a container,
wherein the concentration of ethanol in said foaming or foamable beer or beer-like beverage is below 10 % ABV;
wherein the concentration of carbon dioxide in said foaming or foamable beer or beer-like beverage is below 10 gram carbon of dioxide per liter of said foaming or foamable beer or beer-like beverage;
wherein the concentration of said carbohydrates in said foaming or foamable beer or beer-like beverage is in the range of 1000 to 100000 ppm;
wherein the concentration of said alcohols with more than two carbon atoms in said foaming or foamable beer or beer-like beverage is in the range of 1 to 1000 ppm;
wherein the concentration of said esters with more than three carbon atoms in said foaming or foamable beer or beer-like beverage is in the range of 1 to 200 ppm;
wherein the concentration of said organic acids with more than two carbon atoms in said foaming or foamable beer or beer-like beverage is in the range of 10 to 1000 ppm;
wherein the concentration of said phenolic compounds in said foaming or foamable beer or beer-like beverage is in the range of 1 to 1000 ppm;
wherein the concentration of said whey proteins in said foaming or foamable beer or beer-like beverage is in the range of 100 to 10000 ppm;
wherein the concentration of said hop bitter acids in said foaming or foamable beer or beer-like beverage is in the range of 2 to 200 ppm; and
wherein the concentration of said hop oil compounds in said foaming or foamable beer or beer-like beverage is in the range of 10 to 2000 ppb.

## Patentansprüche

1. Kombination zur Verwendung bei der Herstellung einer trinkbaren schäumenden oder schäumbaren Flüssigkeit, vorzugsweise einer schäumenden oder schäumbaren fermentierten Getränkeflüssigkeit oder fermentierten getränkeähnlichen Flüssigkeit, die in einem Behälter gelagert, angeboten, serviert oder aus diesem konsumiert wird, die Kombination umfassend
mindestens ein individuelles Mittel, um eine Flüssigkeit zuzuführen, umfassend Wasser oder kohlensäurehaltiges Wasser oder mindestens ein individuelles Reservoir, umfassend eine Flüssigkeit, umfassend Wasser oder kohlensäurehaltiges Wasser;
mindestens ein individuelles Reservoir, umfassend eine Flüssigkeit, umfassend ein oder mehrere Kohlenhydrate;
mindestens ein individuelles Reservoir, umfassend eine Flüssigkeit, umfassend einen oder mehrere Alkohole mit mehr als zwei Kohlenstoffatomen und einen oder mehrere Ester mit mehr als drei Kohlenstoffatomen;
mindestens ein individuelles Reservoir, umfassend eine Flüssigkeit, umfassend eine oder mehrere Hopfenbittersäuren; wobei jedes der individuellen Reservoire ein unterschiedliches Reservoir ist;
wobei mindestens eine der Flüssigkeiten in einem der individuellen Reservoire auch eine oder mehrere phenolische Verbindungen umfasst;
wobei mindestens eine der Flüssigkeiten in einem der individuellen Reservoire auch ein oder mehrere Molkeproteine umfasst; und
wobei mindestens eine der Flüssigkeiten in einem der individuellen Reservoire auch eine oder mehrere organische Säuren mit mindestens zwei Kohlenstoffatomen umfasst.

2. Kombination zur Verwendung nach Anspruch 1,
wobei die Kohlenhydrate ausgewählt sind aus der Gruppe von Mono-, Di- und Trisacchariden (wie Glucose, Fructose, Saccharose, Maltose und Maltotriose), Oligosacchariden, Polysacchariden (mit bis zu 250 Glucoseeinheiten), Alpha-Glucanen (mit hauptsächlich DP-Werten zwischen 4 und 34 und einem kleineren Anteil mit DP-Werten über 35) und Beta-Glucanen;
wobei die Alkohole mit mehr als zwei Kohlenstoffatomen ausgewählt sind aus der Gruppe von 1-Propanol, 2-Propanol, 2-Methyl-1-propanol, 2-Methylbutanol, 3-Methyl-1-butanol, 2-Phenylethanol, 1-Octen-3-ol, 2-Decanol und Glycerol;
wobei die Ester mit mehr als drei Kohlenstoffatomen ausgewählt sind aus der Gruppe von Ethylacetat, Isoamylacetat, Isobutylacetat, Hexylacetat, 2-Phenylethylacetat, Ethylbutanoat, Ethylpentanoat, Ethyl-2-methylbutanoat, Ethylhexanoat, Ethyloctanoat, Isoamyloctanoat, Ethylnicotinat und Ethyldecanoat;
wobei die phenolischen Verbindungen ausgewählt sind aus der Gruppe von monomeren Phenolen (wie 4-Vinylguaiacol), phenolischen Alkoholen (wie Tyrosol), phenolischen Säuren wie para-Cumarsäure, Ferulasäuren, Vanillinsäuren, Gallussäuren, Kaffeesäuren, Syringasäuren und Sinapinsäuren, phenolischen Aminen und Aminosäuren wie Hordenin, Tyramin, N-Methyltyramin, Tyrosamin und Tyrosin, Flavonoiden und Catechinen wie (+)-Catechin und (+)-Epicatechin, Anthocyanogenen wie Leucocyanidin, Leucopelargonidin und Leucodelphinidin, Flavonolen wie Quercetin, Kaempferol, Myricetin, Iso-Quercitin, Astragalin und Nutin, und kondensierten Polyphenolen wie dimeren Catechinen und oligomeren und polymeren Derivaten von Catechinen und Anthocyanogenen;
und
wobei die organischen Säuren mit mindestens zwei Kohlenstoffatomen ausgewählt sind aus der Gruppe von Essigsäure, Propansäure, Butansäure, 2-Methylpropansäure, Pentansäure, 2-Methylbutansäure, 3-Methylbutansäure, Octansäure, Decansäure, Milchsäure, Brenztraubensäure, Bernsteinsäure, Kaffeesäure, Zimtsäure, para-Cumarsäure, Ferulasäure, Gallussäure, Hydroxybenzoesäure, Salicylsäure, Sinapinsäure, Syringasäure und Vanillinsäure.

3. Kombination zur Verwendung nach einem der vorstehenden Ansprüche bei der Herstellung eines schäumenden oder schäumbaren Biers oder bierähnlichen Getränks, am meisten bevorzugt eines schäumenden oder schäumbaren alkoholarmen Biers, das in einem Behälter gelagert, angeboten, serviert oder aus diesem konsumiert wird, die Kombination umfassend
mindestens ein individuelles Mittel, um eine Flüssigkeit zuzuführen, umfassend Wasser oder kohlensäurehaltiges Wasser oder mindestens ein individuelles Reservoir, umfassend eine Flüssigkeit, umfassend Wasser oder kohlensäurehaltiges Wasser;
mindestens ein individuelles Reservoir, umfassend Ethanol, vorzugsweise flüssiges Ethanol,;
mindestens ein individuelles Reservoir, umfassend eine Flüssigkeit, umfassend ein oder mehrere Kohlenhydrate; und
mindestens ein individuelles Reservoir, umfassend eine Flüssigkeit, umfassend einen oder mehrere Alkohole mit mehr als zwei Kohlenstoffatomen und einen oder mehrere Ester mit mehr als drei Kohlenstoffatomen; und
mindestens ein individuelles Reservoir, umfassend eine Flüssigkeit, umfassend eine oder mehrere Hopfenbittersäuren;
wobei jedes der individuellen Reservoire ein unterschiedliches Reservoir ist;
wobei mindestens eine der Flüssigkeiten in einem der individuellen Reservoire auch eine oder mehrere phenolische Verbindungen umfasst;
wobei mindestens eine der Flüssigkeiten in einem der individuellen Reservoire auch ein oder mehrere Molkeproteine umfasst;
und
wobei mindestens eine der Flüssigkeiten in einem der individuellen Reservoire auch eine oder mehrere Hopfenölverbindungen umfasst.

4. Kombination zur Verwendung nach Anspruch 3,
wobei die Hopfenbittersäuren ausgewählt sind aus der Gruppe von Isohumulonen, Dihydro-isohumulonen, Tetrahydro-isohumulonen, Hexahydroisohumulonen, Humulonen, reduzierten Humulonen, Huluponen und reduzierten Huluponen; und
wobei die Hopfenölverbindungen ausgewählt sind aus der Gruppe von Hopfenmonoterpenen, oxygenierten Hopfenmonoterpenen, Hopfensesquiterpenen und oxygenierten Hopfensesquiterpenen, Myrcen, Humulen, Caryophyllen, Linalool, Linalooloxiden, Citronellol, Geraniol, Nerol, Geranylacetat, alpha-Terpineol, Humulenepoxid I, Humulenepoxid II, alpha-Eudesmol, Clovanediol, Humulol, Humuladienon und Humulenol.

5. Kombination zur Verwendung nach einem der Ansprüche 1 bis 4 bei der Herstellung eines schäumenden oder schäumbaren Biers oder bierähnlichen Getränks, am meisten bevorzugt eines schäumenden oder schäumbaren Biers, das in einem Behälter gelagert, angeboten, serviert oder aus diesem konsumiert wird, die Kombination umfassend
mindestens ein individuelles Mittel, um eine Flüssigkeit zuzuführen, umfassend Wasser oder kohlensäurehaltiges Wasser oder mindestens ein individuelles Reservoir, umfassend eine Flüssigkeit, umfassend Wasser oder kohlensäurehaltiges Wasser;
mindestens ein individuelles Reservoir, umfassend Ethanol, vorzugsweise flüssiges Ethanol,;
umfassend mindestens ein individuelles Reservoir, umfassend eine Flüssigkeit, umfassend ein oder mehrere Kohlenhydrate;
mindestens ein individuelles Reservoir, umfassend eine Flüssigkeit, umfassend einen oder mehrere Alkohole mit mehr als zwei Kohlenstoffatomen und einen oder mehrere Ester mit mehr als drei Kohlenstoffatomen;
mindestens ein individuelles Reservoir, umfassend eine Flüssigkeit, umfassend eine oder mehrere Hopfenbittersäuren; und
mindestens ein individuelles Reservoir, das Kohlendioxid, vorzugsweise gasförmiges Kohlendioxid, umfasst;
wobei jedes der individuellen Reservoire ein unterschiedliches Reservoir ist;
wobei mindestens eine der Flüssigkeiten in einem der individuellen Reservoire auch eine oder mehrere phenolische Verbindungen umfasst;
wobei mindestens eine der Flüssigkeiten in einem der individuellen Reservoire auch ein oder mehrere Molkeproteine umfasst;
wobei mindestens eine der Flüssigkeiten in einem der individuellen Reservoire auch eine oder mehrere organische Säuren mit mindestens zwei Kohlenstoffatomen umfasst; und
wobei mindestens eine der Flüssigkeiten in einem der individuellen Reservoire auch eine oder mehrere Hopfenölverbindungen umfasst; und wobei mindestens eine der Flüssigkeiten in einem der individuellen Reservoire auch eine oder mehrere botanische Verbindungen umfasst.

6. Kombination zur Verwendung nach einem der Ansprüche 1 bis 5,
wobei die Flüssigkeit, umfassend ein oder mehrere Kohlenhydrate, ferner umfassend mindestens zwei Mitglieder der Gruppe von Molkeproteinen, phenolischen Verbindungen, Schwefelverbindungen, Ethanol, Glycerol, Propylenglycol, Alkoholen mit mehr als zwei Kohlenstoffatomen, Estern mit mehr als drei Kohlenstoffatomen, organischen Säuren mit mindestens zwei Kohlenstoffatomen, anorganischen Kationen und Anionen, Hopfenbittersäuren und Hopfenölverbindungen;
wobei die Schwefelverbindungen aus der Gruppe ausgewählt sind von Schwefelwasserstoff, Schwefeldioxid, Dimethylsulfid, Methionol, Methional, Methylthioacetat, Kohlenstoffdisulfid, Methanthiol, Ethylensulfid, Ethanthiol, Propanthiol, Diethylsulfid, Dimethyldisulfid, Diethyldisulfid, Dimethyltrisulfid, Ethylthioacetat und 3-Methyl-2-buten-1-thiol; und
wobei die anorganischen Kationen und Anionen ausgewählt sind aus der Gruppe von K-Kationen, Na-Kationen, Fe-Kationen, Cu-Kationen, Se-Kationen, Mn-Kationen, Zn-Kationen, Chloridanionen, Sulfatanionen, Sulfitanionen und Phosphatanionen.

7. Vorrichtung zum Zubereiten und Ausgeben einer trinkbaren schäumenden oder schäumbaren Flüssigkeit aus einer Vielzahl von Inhaltsstoffen, vorzugsweise einer schäumenden oder schäumbaren fermentierten Getränkeflüssigkeit oder fermentierten getränkeähnlichen Flüssigkeit, die Vorrichtung umfassend
ein erstes Reservoir (66), das konfiguriert ist, um eine Flüssigkeit zu umfassen, umfassend ein oder mehrere Kohlenhydrate;
ein zweites Reservoir (67), das konfiguriert ist, um eine Flüssigkeit zu umfassen, umfassend einen oder mehrere Alkohole mit mehr als zwei Kohlenstoffatomen und einen oder mehrere Ester mit mehr als drei Kohlenstoffatomen;
ein drittes Reservoir (57), das mit dem Abgabemittel fluidisch verbunden ist und konfiguriert ist, um eine Flüssigkeit zu umfassen, umfassend eine oder mehrere Hopfenbittersäuren;
ein weiteres Reservoir, das mit dem Abgabemittel fluidisch verbunden ist und konfiguriert ist, um eine Flüssigkeit zu umfassen, umfassend ein oder mehrere Molkeproteine;
ein System (63, 64, 65) für kohlensäurehaltiges Wasser, das konfiguriert ist, um kohlensäurehaltiges Wasser bereitzustellen; und
ein Abgabemittel, das mit mindestens dem ersten und dem zweiten Reservoir fluidisch verbunden ist, wobei das Abgabemittel konfiguriert ist, um mindestens eine vorbestimmte Menge der Flüssigkeit aus dem ersten Reservoir, eine vorbestimmte Menge der Flüssigkeit aus dem zweiten Reservoir und eine vorbestimmte Menge des kohlensäurehaltigen Wassers aus dem System für kohlensäurehaltiges Wasser zu empfangen; und
wobei das Abgabemittel konfiguriert ist, um die empfangenen Flüssigkeiten an einen externen Behälter abzugeben, um die trinkbare schäumende oder schäumbare Flüssigkeit zu erhalten.

8. Vorrichtung nach Anspruch 7,
wobei das erste Dosiermittel mit dem ersten Reservoir und dem Abgabemittel fluidisch verbunden ist und konfiguriert ist, um dem Abgabemittel die vorbestimmte Menge der Flüssigkeit aus dem ersten Reservoir bereitzustellen; und
wobei das zweite Dosiermittel mit dem zweiten Reservoir und dem Abgabemittel fluidisch verbunden ist und konfiguriert ist, um dem Abgabemittel die vorbestimmte Menge der Flüssigkeit aus dem zweiten Reservoir bereitzustellen.

9. Vorrichtung nach Anspruch 7 oder 8, die Vorrichtung ferner umfassend mindestens eines von oder eine Kombination des Folgenden:
ein viertes Reservoir (58), das mit dem Abgabemittel fluidisch verbunden ist und konfiguriert ist, um eine Flüssigkeit zu umfassen, umfassend eine oder mehrere Hopfenölverbindungen; und
ein fünftes Reservoir (59), das mit dem Abgabemittel fluidisch verbunden ist und konfiguriert ist, um eine Flüssigkeit zu umfassen, umfassend eine oder mehrere botanische Verbindungen;
wobei das Abgabemittel ferner konfiguriert ist, um mindestens eines von einer vorbestimmten Menge der Flüssigkeit aus dem vierten Reservoir und mindestens eine vorbestimmte Menge des fünften Reservoirs zu empfangen, und konfiguriert ist, um die empfangenen Flüssigkeiten an den externen Behälter abzugeben, um die trinkbare schäumende oder schäumbare Flüssigkeit zu erhalten.

10. Vorrichtung nach einem der Ansprüche 7 bis 9, ferner umfassend mindestens ein Mischgefäß zum mindestens teilweisen Mischen von Inhaltsstoffen oder Inhaltsstoffmischungen aus mindestens dem ersten und zweiten Reservoir; vorzugsweise, wobei das mindestens eine Mischgefäß ein Mischkanal ist, der zwischen mindestens dem ersten und dem zweiten Reservoir und dem Abgabemittel angeordnet ist.

11. Vorrichtung nach einem der Ansprüche 7 bis 10,
wobei das System für kohlensäurehaltiges Wasser ein Reservoir, umfassend eine Flüssigkeit, umfassend Wasser (63), das zum Halten einer Flüssigkeit, umfassend Wasser, konfiguriert ist, ein Reservoir, umfassend Kohlendioxid (64), das zum Halten von Kohlendioxid konfiguriert ist, und ein Karbonisierungsreservoir (65) umfasst;
wobei das Reservoir, umfassend eine Flüssigkeit, Wasser umfasst, und das Reservoir, umfassend Kohlendioxid, mit dem Karbonisierungsreservoir fluidisch verbunden sind, derart, dass das Karbonisierungsreservoir Wasser und Kohlendioxid aus dem Reservoir, umfassend eine Flüssigkeit, umfassend Wasser, empfangen kann, um die empfangene Flüssigkeit, umfassend Wasser, unter Verwendung des empfangenen Kohlendioxids zu karbonisieren; und
wobei das Karbonisierungsreservoir mit dem Abgabemittel fluidisch verbunden ist.

12. Vorrichtung nach einem der Ansprüche 7 bis 11, wobei das System für kohlensäurehaltiges Wasser ein Mittel für eine Impulsinjektion von Kohlendioxid umfasst, das von dem Reservoir, umfassend Kohlendioxid (64), empfangen wird, in eine Flüssigkeit, umfassend Wasser, das in dem Karbonisierungsreservoir gehalten wird, und von dem Reservoir, umfassend eine Flüssigkeit, umfassend Wasser (63) empfangen wird.

13. Vorrichtung nach einem der Ansprüche 7 bis 12, umfassend einen Wärmetauscher, der konfiguriert ist, um ein Fluid zu kühlen, wobei der Wärmetauscher stromaufwärts des Karbonisierungsreservoirs angeordnet ist, derart, dass das aus dem Reservoir empfangene Wasser, umfassend eine Flüssigkeit, umfassend Wasser, gekühlt werden kann.

14. Verfahren zum Herstellen eines schäumenden oder schäumbaren Biers oder bierähnlichen Getränks, vorzugsweise eines schäumenden oder schäumbaren alkoholarmen Biers oder bierähnlichen Getränks, das in einem Behälter gelagert, angeboten, serviert oder aus diesem konsumiert wird, das Verfahren umfassend: Bereitstellen einer Kombination umfassend
mindestens ein individuelles Reservoir, umfassend eine Flüssigkeit, umfassend ein oder mehrere Kohlenhydrate;
mindestens ein individuelles Reservoir, umfassend eine Flüssigkeit, umfassend einen oder mehrere Alkohole mit mehr als zwei Kohlenstoffatomen;
mindestens ein individuelles Reservoir, umfassend eine Flüssigkeit, umfassend einen oder mehrere Ester mit mehr als drei Kohlenstoffatomen; und
mindestens ein individuelles Reservoir, umfassend eine Flüssigkeit, umfassend eine oder mehrere Hopfenbittersäuren;
wobei die Zugabe der Inhaltsstoffe und Inhaltsstoffmischungen die Zugabe von mindestens sechs Mitgliedern der Gruppe von Wasser, Ethanol, Kohlendioxid, einer Flüssigkeit, umfassend ein oder mehrere Kohlenhydrate, einer Flüssigkeit, umfassend einen oder mehrere Alkohole mit mehr als zwei Kohlenstoffatomen, und einem oder mehreren Estern mit mehr als drei Kohlenstoffatomen, einer Flüssigkeit umfassend eine oder mehrere Hopfenbittersäuren;
wobei mindestens eine der Flüssigkeiten in einem der individuellen Reservoire auch eine oder mehrere phenolische Verbindungen umfasst;
wobei mindestens eine der Flüssigkeiten in einem der individuellen Reservoire auch ein oder mehrere Molkeproteine umfasst;
wobei mindestens eine der Flüssigkeiten in einem der individuellen Reservoire auch eine oder mehrere organische Säuren mit mindestens zwei Kohlenstoffatomen umfasst; und
wobei mindestens eine der Flüssigkeiten in einem der individuellen Reservoire auch eine oder mehrere Hopfenölverbindungen umfasst.

15. Verfahren nach Anspruch 14 zum Herstellen eines schäumenden oder schäumbaren Biers oder bierähnlichen Getränks, vorzugsweise eines schäumenden oder schäumbaren alkoholarmen Biers oder bierähnlichen Getränks, das in einem Behälter gelagert, angeboten, serviert oder aus diesem konsumiert wird,
wobei die Konzentration von Ethanol in dem schäumenden oder schäumbaren Bier oder bierähnlichen Getränk unter 10 % ABV liegt;
wobei die Konzentration von Kohlendioxid in dem schäumenden oder schäumbaren Bier oder bierähnlichen Getränk unter 10 Gramm Kohlendioxid pro Liter des schäumenden oder schäumbaren Biers oder bierähnlichen Getränks liegt;
wobei die Konzentration der Kohlenhydrate in dem schäumenden oder schäumbaren Bier oder bierähnlichen Getränk in dem Bereich von 1000 bis 100000 ppm liegt;
wobei die Konzentration der genannten Alkohole mit mehr als zwei Kohlenstoffatomen in dem schäumenden oder schäumbaren Bier oder bierähnlichen Getränk in dem Bereich von 1 bis 1000 ppm liegt;
wobei die Konzentration der Ester mit mehr als drei Kohlenstoffatomen in dem schäumenden oder schäumbaren Bier oder bierähnlichen Getränk in dem Bereich von 1 bis 200 ppm liegt;
wobei die Konzentration der organischen Säuren mit mehr als zwei Kohlenstoffatomen in dem schäumenden oder schäumbaren Bier oder bierähnlichen Getränk in dem Bereich von 10 bis 1000 ppm liegt;
wobei die Konzentration der phenolischen Verbindungen in dem schäumenden oder schäumbaren Bier oder bierähnlichen Getränk in dem Bereich von 1 bis 1000 ppm liegt;
wobei die Konzentration der Molkeproteine in dem schäumenden oder schäumbaren Bier oder bierähnlichen Getränk in dem Bereich von 100 bis 10000 ppm liegt;
wobei die Konzentration der Hopfenbittersäuren in dem schäumenden oder schäumbaren Bier oder bierähnlichen Getränk in dem Bereich von 2 bis 200 ppm liegt; und
wobei die Konzentration der Hopfenölverbindungen in dem schäumenden oder schäumbaren Bier oder bierähnlichen Getränk in dem Bereich von 10 bis 2000 ppb liegt.

## Revendications

1. Combinaison destinée à être utilisée pour la préparation d'un liquide moussant ou moussable buvable, de préférence un liquide de boisson fermentée ou un liquide de type boisson fermentée moussant ou moussable, stocké dans, proposé dans, servi dans ou consommé à partir d'un récipient, ladite combinaison comprenant
au moins un moyen individuel pour alimenter un liquide comprenant de l'eau ou de l'eau gazeuse ou au moins un réservoir individuel comprenant un liquide comprenant de l'eau ou de l'eau gazeuse ;
au moins un réservoir individuel comprenant un liquide comprenant un ou plusieurs glucides ;
au moins un réservoir individuel comprenant un liquide comprenant un ou plusieurs alcools avec plus de deux atomes de carbone et un ou plusieurs esters avec plus de trois atomes de carbone ;
au moins un réservoir individuel comprenant un liquide comprenant un ou plusieurs acides amers de houblon ; dans laquelle chacun desdits réservoirs individuels est un réservoir différent ;
dans laquelle au moins l'un desdits liquides dans l'un desdits réservoirs individuels comprend également un ou plusieurs composés phénoliques ;
dans laquelle au moins l'un desdits liquides dans l'un desdits réservoirs individuels comprend également une ou plusieurs protéines de lactosérum ; et
dans laquelle au moins l'un desdits liquides dans l'un desdits réservoirs individuels comprend également un ou plusieurs acides organiques avec au moins deux atomes de carbone.

2. Combinaison destinée à être utilisée selon la revendication 1,
dans laquelle lesdits glucides sont choisis dans le groupe des mono-, di-, et trisaccharides (tels que glucose, fructose, saccharose, maltose et maltotriose), oligosaccharides, polysaccharides (avec jusqu'à 250 motifs glucose), alpha-glucanes (avec des valeurs de DP principalement comprises entre 4 et 34 et une fraction plus petite avec des valeurs de DP supérieures à 35), et bêta-glucanes ;
dans laquelle lesdits alcools avec plus de deux atomes de carbone sont choisis dans le groupe de 1-propanol, 2-propanol, 2-méthyl-1-propanol, 2-méthyl-butanol, 3-méthyl-1-butanol, 2-phényléthanol, 1-octén-3-ol, 2-décanol et glycérol ;
dans lequel lesdits esters ayant plus de trois atomes de carbone sont choisis dans le groupe d'acétate d'éthyle, acétate d'isoamyle, acétate d'isobutyle, acétate d'hexyle, acétate de 2-phényléthyle, butanoate d'éthyle, pentanoate d'éthyle, 2-méthylbutanoate d'éthyle, hexanoate d'éthyle, octanoate d'éthyle, octanoate d'isoamyle, nicotinate d'éthyle et décanoate d'éthyle ;
dans lequel lesdits composés phénoliques sont choisis dans le groupe de phénols monomères (tels que le 4-vinylgaïacol), alcools phénoliques (tels que le tyrosol), acides phénoliques tels que l'acide para-coumarique, acides féruliques, acides vanilliques, acides galliques, acides caféiques, acides syringiques, et acides sinapiques, amines phénoliques et acides aminés tels que hordénine, tyramine, N-méthyltyramine, tyrosamine et tyrosine, flavonoïdes et catéchines tels que (+)-catéchine et (+)-épicatéchine, antho-cyanogènes tels que leucocyanidine, leucopélargonidine et leucodelphinidine, flavonols tels que quercétine, kaempférol, myricétine, iso-quercitine, astragaline et nutine, et polyphénols condensés tels que catéchines dimériques et dérivés oligomères et polymères des catéchines, et anthocyanogènes ;
et
dans lequel lesdits acides organiques avec au moins deux atomes de carbone sont choisis dans le groupe d'acide acétique, acide propanoïque, acide butanoïque, acide 2-méthylpropanoïque, acide pentanoïque, acide 2-méthylbutanoïque, acide 3-méthylbutanoïque, acide octanoïque, acide décanoïque, acide lactique, acide pyruvique, acide succinique, acide caféique, acide cinnamique, l'acide para-coumarique, acide férulique, acide gallique, acide hydroxybenzoïque, acide salicylique, acide sinapique, acide syringique et acide vanillique.

3. Combinaison destinée à être utilisée selon l'une quelconque des revendications précédentes, dans la préparation d'une bière ou d'une boisson de type bière moussante ou moussable, le plus préférablement une bière moussante ou moussable à faible teneur en alcool, stockée dans, proposée dans, servie dans ou consommée à partir d'un récipient, ladite combinaison comprenant
au moins un moyen individuel pour alimenter un liquide comprenant de l'eau ou de l'eau gazeuse ou au moins un réservoir individuel comprenant un liquide comprenant de l'eau ou de l'eau gazeuse ;
au moins un réservoir individuel comprenant de l'éthanol, de préférence de l'éthanol liquide ;
au moins un réservoir individuel comprenant un liquide comprenant un ou plusieurs glucides ; et
au moins un réservoir individuel comprenant un liquide comprenant un ou plusieurs alcools avec plus de deux atomes de carbone, et un ou plusieurs esters avec plus de trois atomes de carbone ; et
au moins un réservoir individuel comprenant un liquide comprenant un ou plusieurs acides amers de houblon ;
dans laquelle chacun desdits réservoirs individuels est un réservoir différent ;
dans laquelle au moins l'un desdits liquides dans l'un desdits réservoirs individuels comprend également un ou plusieurs composés phénoliques ;
dans laquelle au moins l'un desdits liquides dans l'un desdits réservoirs individuels comprend également une ou plusieurs protéines de lactosérum ;
et
dans laquelle au moins l'un desdits liquides dans l'un desdits réservoirs individuels comprend également un ou plusieurs composés d'huile de houblon.

4. Combinaison destinée à être utilisée selon la revendication 3,
dans laquelle lesdits acides amers de houblon sont choisis dans le groupe des isohumulones, dihydro-isohumulones, tétrahydro-isohumulones, hexahydro-isohumulones, humulones, humulones réduites, hulupones, et hulupones réduites ; et
dans laquelle lesdits composés d'huile de houblon sont choisis dans le groupe de monoterpènes de houblon, monoterpènes de houblon oxygénés, sesquiterpènes de houblon et sesquiterpènes de houblon oxygénés, myrcène, humulène, caryophyllène, linalol, oxydes de linalol, citronellol, géraniol, nérol, acétate de géranyle, alpha-terpinéol, humulène époxyde I, humulène époxyde II, alpha-eudesmol, clovanediol, humulol, humuladiénone, et humulénol.

5. Combinaison destinée à être utilisée, selon l'une quelconque des revendications 1 à 4, dans la préparation d'une bière ou d'une boisson de type bière moussante ou moussable, le plus préférablement une bière moussante ou moussable, stockée dans, proposée dans, servie dans ou consommée à partir d'un récipient, ladite combinaison comprenant
au moins un moyen individuel pour alimenter un liquide comprenant de l'eau ou de l'eau gazeuse ou au moins un réservoir individuel comprenant un liquide comprenant de l'eau ou de l'eau gazeuse ;
au moins un réservoir individuel comprenant de l'éthanol, de préférence de l'éthanol liquide ;
comprenant au moins un réservoir individuel comprenant un liquide comprenant un ou plusieurs glucides ;
au moins un réservoir individuel comprenant un liquide comprenant un ou plusieurs alcools avec plus de deux atomes de carbone, et un ou plusieurs esters avec plus de trois atomes de carbone ;
au moins un réservoir individuel comprenant un liquide comprenant un ou plusieurs acides amers de houblon ; et
au moins un réservoir individuel comprenant du dioxyde de carbone, de préférence du dioxyde de carbone gazeux ;
dans laquelle chacun desdits réservoirs individuels est un réservoir différent ;
dans laquelle au moins l'un desdits liquides dans l'un desdits réservoirs individuels comprend également un ou plusieurs composés phénoliques ;
dans laquelle au moins l'un desdits liquides dans l'un desdits réservoirs individuels comprend également une ou plusieurs protéines de lactosérum ;
dans laquelle au moins l'un desdits liquides dans l'un desdits réservoirs individuels comprend également un ou plusieurs acides organiques avec au moins deux atomes de carbone ; et
dans laquelle au moins l'un desdits liquides dans l'un desdits réservoirs individuels comprend également un ou plusieurs composés d'huile de houblon ; et dans laquelle au moins l'un desdits liquides dans l'un desdits réservoirs individuels comprend également un ou plusieurs composés botaniques.

6. Combinaison destinée à être utilisée, selon l'une quelconque des revendications 1 à 5,
dans laquelle ledit liquide comprenant un ou plusieurs glucides comprend en outre au moins deux éléments du groupe des protéines de lactosérum, composés phénoliques, composés soufrés, éthanol, glycérol, propylène glycol, alcools avec plus de deux atomes de carbone, esters avec plus de trois atomes de carbone, acides organiques avec au moins deux atomes de carbone, cations inorganiques et anions, acides amers de houblon, et composés d'huile de houblon ;
dans laquelle lesdits composés soufrés sont choisis dans le groupe de sulfure d'hydrogène, dioxyde de soufre, sulfure de diméthyle, méthionol, méthional, thioacétate de méthyle, disulfure de carbone, méthanethiol, sulfure d'éthylène, éthanethiol, propanethiol, sulfure de diéthyle, disulfure de diméthyle, disulfure de diéthyle, trisulfure de diméthyle, thioacétate d'éthyle et 3-méthyl-2-butène-1-thiol ; et
dans laquelle lesdits cations et anions inorganiques sont choisis dans le groupe de cations K, cations Na, cations Fe, cations Cu, cations Se, cations Mn, cations Zn, anions chlorure, anions sulfate, anions sulfite, et anions phosphate.

7. Dispositif permettant de préparer et de distribuer un liquide moussant ou moussable buvable à partir d'une pluralité d'ingrédients, de préférence un liquide de boisson fermentée moussant ou moussable ou un liquide de type boisson fermentée, le dispositif comprenant
un premier réservoir (66) conçu pour comprendre un liquide comprenant un ou plusieurs glucides ;
un deuxième réservoir (67) conçu pour comprendre un liquide comprenant un ou plusieurs alcools avec plus de deux atomes de carbone, et un ou plusieurs esters avec plus de trois atomes de carbone ;
un troisième réservoir (57) relié fluidiquement au moyen de distribution et conçu pour comprendre un liquide comprenant un ou plusieurs acides amers de houblon ;
un réservoir supplémentaire relié fluidiquement au moyen de distribution et conçu pour comprendre un liquide comprenant une ou plusieurs protéines de lactosérum ;
un système d'eau gazeuse (63, 64, 65) configuré pour fournir de l'eau gazeuse ; et
un moyen de distribution relié fluidiquement à au moins le premier et le deuxième réservoir, dans lequel le moyen de distribution est conçu pour recevoir au moins une quantité prédéterminée du liquide provenant du premier réservoir, une quantité prédéterminée du liquide provenant du deuxième réservoir, et une quantité prédéterminée de l'eau gazeuse provenant du système d'eau gazeuse ; et
dans lequel le moyen de distribution est conçu pour distribuer les liquides reçus dans un récipient externe afin d'obtenir ledit liquide moussant ou moussable buvable.

8. Dispositif selon la revendication 7,
dans lequel le premier moyen de dosage est relié fluidiquement au premier réservoir et au moyen de distribution, et conçu pour fournir au moyen de distribution la quantité prédéterminée du liquide provenant du premier réservoir ; et
dans lequel le second moyen de dosage est relié fluidiquement au deuxième réservoir, et au moyen de distribution et conçu pour fournir au moyen de distribution la quantité prédéterminée du liquide provenant du deuxième réservoir.

9. Dispositif selon les revendications 7 ou 8, le dispositif comprenant en outre au moins l'un des éléments suivants ou une combinaison de ceux-ci :
un quatrième réservoir (58) relié fluidiquement au moyen de distribution et conçu pour comprendre un liquide comprenant un ou plusieurs composés d'huile de houblon ; et
un cinquième réservoir (59) relié fluidiquement au moyen de distribution et conçu pour comprendre un liquide comprenant un ou plusieurs composés botaniques ;
dans lequel le moyen de distribution est en outre conçu pour recevoir au moins l'une parmi une quantité prédéterminée du liquide provenant du quatrième réservoir, et au moins une quantité prédéterminée du cinquième réservoir, et est conçu pour distribuer les liquides reçus vers le récipient externe afin d'obtenir ledit liquide moussant ou moussable buvable.

10. Dispositif selon l'une quelconque des revendications 7 à 9, comprenant en outre au moins un récipient de mélange pour mélanger au moins partiellement des ingrédients ou des mélanges d'ingrédients provenant d'au moins le premier et le deuxième réservoir ; de préférence, dans lequel l'au moins un récipient de mélange est un canal de mélange agencé entre au moins le premier et le deuxième réservoir, et le moyen de distribution.

11. Dispositif selon l'une quelconque des revendications 7 à 10,
dans lequel le système d'eau gazeuse comprend un réservoir comprenant un liquide comprenant de l'eau (63) conçu pour contenir un liquide comprenant de l'eau, un réservoir comprenant du dioxyde de carbone (64) conçu pour contenir du dioxyde de carbone, et un réservoir de carbonatation (65) ;
dans lequel le réservoir comprenant un liquide comprenant de l'eau et le réservoir comprenant du dioxyde de carbone sont reliés fluidiquement au réservoir de carbonatation de telle sorte que le réservoir de carbonatation peut recevoir de l'eau et du dioxyde de carbone à partir du réservoir comprenant un liquide comprenant de l'eau pour carbonater le liquide reçu comprenant de l'eau à l'aide du dioxyde de carbone reçu ; et
dans lequel le réservoir de carbonatation est relié fluidiquement au moyen de distribution.

12. Dispositif selon l'une quelconque des revendications 7 à 11, dans lequel le système d'eau gazeuse comprend un moyen d'injection pulsée de dioxyde de carbone reçu du réservoir comprenant du dioxyde de carbone (64) dans un liquide comprenant de l'eau renfermé par le réservoir de carbonatation, et reçu du réservoir comprenant un liquide comprenant de l'eau (63).

13. Dispositif selon l'une quelconque des revendications 7 à 12, comprenant un échangeur de chaleur configuré pour refroidir un fluide, dans lequel l'échangeur de chaleur est agencé en amont du réservoir de carbonatation, de telle sorte que l'eau reçue du réservoir comprenant un liquide comprenant de l'eau peut être refroidie.

14. Procédé de préparation d'une bière ou d'une boisson de type bière moussante ou moussable, de préférence d'une bière ou d'une boisson de type bière à faible teneur en alcool moussante ou moussable, stockée dans, proposée dans, servie dans, ou consommée à partir d'un récipient, ledit procédé comprenant : la fourniture d'une combinaison comprenant
au moins un réservoir individuel comprenant un liquide comprenant un ou plusieurs glucides ;
au moins un réservoir individuel comprenant un liquide comprenant un ou plusieurs alcools avec plus de deux atomes de carbone ;
au moins un réservoir individuel comprenant un liquide comprenant un ou plusieurs esters avec plus de trois atomes de carbone ; et
au moins un réservoir individuel comprenant un liquide comprenant un ou plusieurs acides amers de houblon ;
dans lequel l'addition desdits ingrédients et mélanges d'ingrédients comprend l'addition d'au moins six éléments du groupe constitué par eau, éthanol, dioxyde de carbone, un liquide comprenant un ou plusieurs glucides, un liquide comprenant un ou plusieurs alcools avec plus de deux atomes de carbone, et un ou plusieurs esters avec plus de trois atomes de carbone, un liquide comprenant un ou plusieurs acides amers de houblon ;
dans lequel au moins l'un desdits liquides dans l'un desdits réservoirs individuels comprend également un ou plusieurs composés phénoliques ;
dans lequel au moins l'un desdits liquides dans l'un desdits réservoirs individuels comprend également une ou plusieurs protéines de lactosérum ;
dans lequel au moins l'un desdits liquides dans l'un desdits réservoirs individuels comprend également un ou plusieurs acides organiques avec au moins deux atomes de carbone ; et
dans lequel au moins l'un desdits liquides dans l'un desdits réservoirs individuels comprend également un ou plusieurs composés d'huile de houblon.

15. Procédé selon la revendication 14, pour la préparation d'une bière ou d'une boisson de type bière moussante ou moussable, de préférence d'une bière ou d'une boisson de type bière à faible teneur en alcool moussante ou moussable, stockée dans, proposée dans, servie dans, ou consommée à partir d'un récipient,
dans lequel la concentration d'éthanol dans ladite bière ou boisson de type bière moussante ou moussable est inférieure à 10 % ABV ;
dans lequel la concentration de dioxyde de carbone dans ladite bière ou boisson de type bière moussante ou moussable est inférieure à 10 grammes de carbone de dioxyde par litre de ladite bière ou boisson de type bière moussante ou moussable ;
dans lequel la concentration desdits glucides dans ladite bière ou boisson de type bière moussante ou moussable est dans la plage de 1000 à 100 000 ppm ;
dans lequel la concentration desdits alcools avec plus de deux atomes de carbone dans ladite bière ou boisson de type bière moussante ou moussable est dans la plage de 1 à 1000 ppm ;
dans lequel la concentration desdits esters avec plus de trois atomes de carbone dans ladite bière ou boisson de type bière moussante ou moussable est dans la plage de 1 à 200 ppm ;
dans lequel la concentration desdits acides organiques avec plus de deux atomes de carbone dans ladite bière ou boisson de type bière moussante ou moussable est dans la plage de 10 à 1000 ppm ;
dans lequel la concentration desdits composés phénoliques dans ladite bière ou boisson de type bière moussante ou moussable est dans la plage de 1 à 1000 ppm ;
dans lequel la concentration desdites protéines de lactosérum dans ladite bière ou boisson de type bière moussante ou moussable est dans la plage de 100 à 10 000 ppm ;
dans lequel la concentration desdits acides amers de houblon dans ladite bière ou boisson de type bière moussante ou moussable est dans la plage de 2 à 200 ppm ; et
dans lequel la concentration desdits composés d'huile de houblon dans ladite bière ou boisson de type bière moussante ou moussable est dans la plage de 10 à 2000 ppb.
